(19) Europäisches Patentamt
European Patent Office
Office européen des brevets

(11) EP 4 408 906 B1

(12) **EUROPÄISCHE PATENTSCHRIFT**

(45) Veröffentlichungstag und Bekanntmachung des Hinweises auf die Patenterteilung:
**28.05.2025 Patentblatt 2025/22**

(21) Anmeldenummer: **21787324.9**

(22) Anmeldetag: **29.09.2021**

(51) Internationale Patentklassifikation (IPC):
***C08G 77/04*** *(2006.01)* ***C08G 77/06*** *(2006.01)*
***C08G 77/20*** *(2006.01)*

(52) Gemeinsame Patentklassifikation (CPC):
**C08G 77/04; C08G 77/06; C08G 77/20**

(86) Internationale Anmeldenummer:
**PCT/EP2021/076881**

(87) Internationale Veröffentlichungsnummer:
**WO 2023/051912 (06.04.2023 Gazette 2023/14)**

(54) **VERFAHREN ZUR HERSTELLUNG VON SILANOL-ARMEN POLYORGANOSILOXANEN**

METHOD FOR PREPARING LOW-SILANOL POLYORGANOSILOXANES

PROCÉDÉ DE PRÉPARATION DE POLYORGANOSILOXANES À FAIBLE TENEUR EN SILANOL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**07.08.2024 Patentblatt 2024/32**

(73) Patentinhaber: **Wacker Chemie AG**
**81671 München (DE)**

(72) Erfinder:
- **SANDMEYER, Frank**
**84508 Burgkirchen (DE)**
- **HAHN, Claudia Katharina**
**84562 Mettenheim (DE)**

(74) Vertreter: **Belz, Ferdinand et al**
**Wacker Chemie AG**
**Gisela-Stein-Straße 1**
**81671 München (DE)**

(56) Entgegenhaltungen:
**EP-A1- 0 624 591**
**US-A1- 2013 005 935**
**US-A1- 2021 332 190**
**US-B2- 11 059 994**
**US-B2- 7 358 316**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Processed by Luminess, 75001 PARIS (FR)

## Beschreibung

Die vorliegende Erfindung betrifft ein Verfahren zur Herstellung von Polyorganosiloxanen, mit dem sichergestellt ist, dass polare Si-O-C-gebundene und Silanolgruppen auf ein Minimum reduziert werden und so die Polyorganosiloxane für Hochfrequenzanwendungen geeignete dielektrische Eigenschaften aufweisen.

## Stand der Technik:

Mit der fortschreitenden Erschließung der Hochfrequenztechnologie für die drahtlose Kommunikation steigt der Bedarf an Materialien, die zu ihrer Realisierung geeignet sind. Dies betrifft alle Bereiche von Materialien wie Kupferfolien, Bindemittel, Glasfasern, etc. Bei den Bindemitteln sind die klassischer Weise für die Herstellung von kupferkaschierten Laminaten bzw. infolge zur Platinenherstellung verwendeten Epoxidharze aufgrund zu hoher dielektrischer Verlustfaktoren nicht mehr einsetzbar. Polytetrafluorethylen, das einen sehr niedrigen dielektrischen Verlustfaktor besitzt und für Hochfrequenzanwendungen unter diesem Aspekt gut einsetzbar ist, besitzt andere Nachteile, insbesondere die schlechte Verarbeitbarkeit und schlechte Haftungseigenschaften, die eine Alternative wünschenswert machen. Polyphenylenether werden derzeit als Bindemittel für dieses Anwendungsgebiet intensiv genutzt, da sie niedrige dielektrische Verlustfaktoren mit guten mechanischen und thermischen Eigenschaften und Wasserabweisung verbinden. Daneben werden derzeit auch andere organische Polymere in den aktuellen Entwicklungstätigkeiten für dieses Anwendungsfeld berücksichtigt, wie beispielsweise Bismaleimidpolymere, Bismaleimid Triazin Copolymere und Kohlenwasserstoffharze, wobei diese Aufzählung durch weitere ergänzt werden könnte.

Polyorgansiloxane besitzen grundsätzlich exzellente Hitzefestigkeit, Bewitterungsstabilität und Hydrophobie, sind flammfest und verfügen über niedrige dielektrische Verlustfaktoren.

Diese Eigenschaftsprofile qualifizieren sowohl die genannten organischen Polymere als auch die Polyorganosiloxane für den Einsatz als Bindemittel für die Herstellung von hochfrequenzfähigen kupferkaschierten Laminaten und Bauteilen, wie Platinen und Antennen. Daher ist es naheliegend, die positiven Eigenschaften dieser Materialklassen zu vereinen, um ihre Leistungsfähigkeit symbiotisch zu erhöhen. Entsprechende Versuche sind bereits im Stand der Technik dokumentiert.

Polare Substituenten in den Polyorganosiloxanen sind dabei unerwünscht, da sie den dielektrischen Verlustfaktor in die Höhe treiben. Gemäß Stand der Technik werden Polyorganosiloxane vorzugsweise durch einen hydrolytischen Kondensationsprozess hergestellt. Dabei werden gegebenenfalls auch Alkohole mitverwendet. Siehe hierzu beispielsweise: Kombinationen aus Polyorganosiloxanen und Polyphenylenethern zur Verbesserung der Flammfestigkeit werden in US 6258881 beschrieben. Hierfür eigenen sich insbesondere feste Polyorganosiloxane mit einer bestimmten Partikelgröße.

Weitere Beispiele für die Verwendung von Zusammensetzungen aus physikalischen Mischungen von Polyphenylenethern mit Polyorganosiloxanen zur Verbesserung spezifischer Eigenschaften finden sich in US 3737479 (Verbesserung der Schlagzähigkeit), US 5834585 (Mischungen aus chemisch härtbaren Polyphenylenethern mit verbesserter Verarbeitbarkeit), US 2004/0138355 (Verbesserung der Flammfestigkeit durch Abmischungen mit geschlossenen und teilgeöffneten Silsesquioxan Käfigstrukturen), US 3960985 (Verbesserung der thermischen Stabilität von Gemischen aus Polyphenylenethern mit alkenylaromatischen Polymeren durch Zusatz geringer Mengen kettenständig Si-H-funktioneller Polydimethylsiloxane).

Diese Beispiele belegen das Interesse und die grundsätzliche Verwendbarkeit von Polyorganosiloxanen als Additive und Cobindemittel für Hochfrequenzanwendungen.

US 2016/0244610 beschreibt Zusammensetzungen aus Mischungen von olefinisch ungesättigten MQ-Harzen mit ungesättigt modifizierten Polyphenylenethern, wobei durch die Verwendung des MQ-Harzes die dielektrischen und die thermischen Eigenschaften der Polyphenylenether verbessert werden sollen. Allerdings weisen die Beispiele in US 2016/0244610 recht hohe dielektrische Verlustfaktoren der erfindungsgemäßen Zusammensetzungen auf.

Da in der Erläuterung des technologischen Umfeldes, in US 2016/0244610 in besonderer Weise auf die künftige Entwicklung der Kommunikationstechnologie Bezug genommen wird, muss die Erfindung in Relation zu den Anforderungen dieses Umfeldes betrachtet und bewertet werden.

Betreffend die Anforderung und bereits erreichten Leistungsfähigkeit heutiger Materialien mit Eignung für den Einsatz für 5G Anwendungen sei auf US 2020/369855 verwiesen. In US 2016/0244610 wird ausgeführt und auch beansprucht, dass die erfindungsgemäßen Polyorganosiloxane durch einen hydrolytischen Prozess aus den Monomeren hergestellt werden. Für diesen Prozess wird zusätzlich Alkohol als Lösemittel und alkoxylierte Vorstufen als Reagenzien eingesetzt.

Da es in US 2016/0244610 versäumt wird die erhaltenen MQ-Harze analytisch zu beschreiben, sei an dieser Stelle auf US 5548053 als einen nachvollziehbareren Stand der Technik hingewiesen, der die Synthese von MQ-Harzen in einem hydrolytischen Prozess beschreibt. Das besondere des Prozesses gemäß US 5548053 besteht dabei darin, dass die MQ-Harze in einem zweistufigen Verfahren hergestellt werden, um im zweiten Schritt die Zahl der Restsilanolgruppen

zu reduzieren. Die sonstige Vorgehensweise ist prinzipiell zur Vorgehensweise in den Beispielen gemäß US 2016/0244610 vergleichbar.

Da die zweite Stufe des Prozesses gemäß US 5548053 in US 2016/0244610 nicht angewendet wird, ist auch der Effekt der Reduzierung der Silanolgruppen wie in US 5548053 erzielt, in US 2016/0244610 nicht zu erwarten. Damit ist von einer höheren Silanolgruppenzahl in US 2016/0244610 auszugehen als in US 5548053 angegeben. Trotz der gezielten Reduzierung der Silanolgruppen durch das erfindungsgemäße Verfahren aus US 5548053 bleiben substanzielle Mengen von Alkoxygruppen erhalten, die ebenfalls Si-O-C-gebundene polare Gruppen sind und der Erzielung eines niedrigen dielektrischen Verlustfaktors entgegenstehen. Da US 5548053 hinsichtlich der Synthese der MQ-Harze zwar einen älteren, aber dennoch überlegeneren Stand der Technik zur Reduzierung polarer Gruppen darstellt, besitzen die MQ-Harze gemäß US 2016/0244610 für die Verwendung in Hochfrequenzanwendungen hinsichtlich der Anzahl der siliziumgebundenen polaren Gruppen schlechtere Eigenschaften als die gemäß US 5548053 erhältlichen. Dass in US 2016/0244610 in den Beispielen nicht auf den bereits vorliegenden Stand der Technik US 5548053 zurückgegriffen wird, ist in diesem Zusammenhang unverständlich. Wie dargestellt, würden allerdings auch in diesem Fall neben restlichen Mengen Silanolgruppen Alkoxygruppen in größerer Menge im Harz verbleiben.

Eine weitere Schwäche der Lehre gemäß US 2016/0244610 ist das unbefriedigende Ergebnis der erfindungsgemäßen Zusammensetzungen in den Anwendungsergebnissen dadurch, dass die eingesetzten MQ-Harze in der Polyphenylenether-Matrix nicht verträglich sind. Dieser Umstand wird klar erkannt und in den Beispielen dokumentiert, so dass der problemlösende Charakter der Erfindung gemäß US 2016/0244610 nicht erkennbar ist, so dass US 2016/0244610 ihr Ziel verfehlt und weder Lehre noch Nutzen der dargebotenen Kombinationen für den Bereich der drahtlosen Hochfrequenz-Kommunikationstechnologie erkennen lässt.

Was US 2016/0244610 allerdings zeigt, ist die Tatsache, dass homogene physikalische Zusammensetzungen von Siliconen, in diesem Fall Siliconharze vom Typ MQ-Harze mit Polyphenylenethern nicht ohne weiteres möglich sind. Die Auswahl insbesondere geeigneter Siliconharze, die sowohl verträglich, gut verarbeitbar und in geeigneter Darreichungsform verfügbar sind und die eine synergistische Verstärkung der positiven Eigenschaften sowohl der organischen Komponente des Polyphenylenethers als auch der Siliconkomponente gestatten, stellt eine besondere Herausforderung dar. Im Interesse eines optimalen Ergebnisses ist es dann zusätzlich erforderlich die erfindungsgemäß einsetzbaren Polyorganosiloxane nach geeigneten Verfahren herzustellen, die polare Gruppen auf ein Minimum reduzieren. Ein solches Verfahren ist weder in US 2016/0244610 noch in US 5548053 zu finden.

In gleicher Weise wie US 2016/0244610 beschreibt auch US 2018/0220530 Zusammensetzungen aus Gemischen von Siliconharzen, in diesem Fall vom Typ MT, MDT, MDQ und MTQ, die ohne nähere Einschränkung pauschal und als Klassen beansprucht werden. Die beanspruchten Siliconharze werden allesamt durch einen hydrolytischen Prozess hergestellt.

US 2018/0215971 lehrt in gleicher Weise wie US 2016/0244610 und US 2018/0220530 Zusammensetzungen aus Gemischen von Siliconharzen, in diesem Fall vom Typ TT und TQ, die auch in diesem Fall ohne nähere Einschränkung pauschal und als Klassen beansprucht werden, mit vinyl- oder (meth)acrylatfunktionellen Polyphenylenethern, wobei beansprucht wird, dass alle erfindungsgemäßen Siliconharze durch einen hydrolytischen Prozess aus den Ausgangsmonomeren hergestellt werden.

US 2018/0215971 und US 2018/0220530 teilen wiederum keine analytischen Daten mit, aus denen erkennbar wäre inwieweit Si-O-C-gebundene polare Gruppen und Silanolgruppen im angewandten Syntheseprozess erhalten bleiben.

Die in beiden Erfindungen angestrebten dielektrischen Verlustfaktoren betragen $< 0{,}007$. Diese Anforderung wird mit frisch hergestellten Probekörpern aus den erfindungsgemäßen Materialien erreicht, wenngleich auch nicht signifikant unterschritten, so dass der Stand der Technik gemäß US 2018/0215971 und US 2018/0220530 deutlichen Raum für Verbesserungen offenlässt.

Gemessen an den dielektrischen Verlustfaktoren der erfindungsgemäßen Lösungen nach US 2018/0215971 und US 2018/0220530 ist beachtlich, dass die Zusammensetzungen gemäß US 2018/0215971 und US 2018/0220530 deutlich teurer sind als bereits verfügbare Lösungen gemäß Stand der Technik, die vergleichbare dielektrische Verlustfaktoren wesentlich wirtschaftlicher erreichen. Somit fehlt es auch diesen Erfindungen an einer den Stand der Technik weiterentwickelnden Lehre, und eine Realisierung der Erfindungen gemäß US 2016/0244610, US 2018/0215971 und US 2018/0220530 scheint unwahrscheinlich.

Das Dokument US 7 358 316 B2 bezieht sich auf Materialien mit niedriger Dielektrizitätskonstante für neue elektrische und elektronische Geräte. Das in diesem Dokument offenbarte Verfahren entspricht dem ersten Schritt des vorliegenden Verfahrens, wobei Wasser und jegliche Restsäure durch Waschen und Trocknen entfernt werden.

Eine Alternative zu einem hydrolytischen Herstellverfahren zur Synthese von Polyorganosiloxanen lehrt US 2019359774. Hierbei werden Alkalimetallsiliconate, erhältlich aus der Umsetzung von Organosilanolen oder alkoxyfunktionellen Silan- oder Siloxanvorstufen mit Alkalimetallhydroxyden, in einem wasserfreien Kondensationsprozess mit Chlorsilylkomponenten umgesetzt. Die im erfindungsgemäßen Verfahren umgesetzten Alkalimetallsiliconate werden dabei in einem eigenen vorgeschalteten Syntheseschritt hergestellt. Im Verfahren wird eine Hilfsbase zugesetzt, um den

während der Reaktion entstehenden Chlorwasserstoff zu binden. Salz wird abfiltriert oder in der Aufarbeitung mit Wasser als wässrige Lösung entfernt. Auf diesem Wege werden silanolfreie und alkoxyfreie lineare Polyorganosiloxane erhalten.

Die Anwendbarkeit der Synthese auf silanolfunktionelle Polyorganosiloxane ohne den Umweg über die Alkalimetallsiliconate zu gehen, wird nicht gezeigt. Außerdem bleibt die Synthese beschränkt auf lineare Polyorganosiloxane.

**Aufgabenstellung:**

Die vorliegende Erfindung ist der Aufgabe gewidmet vernetzbare Polyorganosiloxane mit zur Verwendung als Bindemittel für Hochfrequenzanwendungen geeigneten dielektrischen Eigenschaften in einem wasserfreien Prozess so bereitzustellen, dass sie wirtschaftlich, insbesondere ohne den Umweg über Metallsilikonate oder andere in einem separaten Schritt zu erzeugende Rohstoffe mit einem Minimum an Si-O-C-gebundenen polaren Gruppen und in für die Anwendung ausreichender struktureller Vielfalt, insbesondere auch mit dreidimensionaler Struktur erhalten werden.

Dazu gehört, dass sie als reines Bindemittel bei 10 GHz einen dielektrischen Verlustfaktor von nicht mehr als 0,0040 besitzen, gegebenenfalls vorhandene den dielektrischen Verlustfaktor senkende Füllstoffe gut benetzen, die Herstellung klebfreier Prepregs gestatten und mit organischen Polymeren verträgliche Zubereitungen ergeben.

Gegenstand der Erfindung ist ein Verfahren zur Herstellung von Polyorganosiloxanen der Formel (I)

$$[O_{3-a/2}R_aSiY(SiR_aO_{3-a/2})_b]_c(R^1SiO_{3/2})_d(R^2{}_2SiO_{2/2})_e(R^3{}_3SiO_{1/2})_f(SiO_{4/2})_g\,[O_{3-h/2}R^4{}_hSi(SiR^5{}_2)_iSiR^4{}_jO_{3-j/2}]_k \qquad (I)$$

wobei die Reste R gleiche oder verschiedene Reste sein können und entweder einen Wasserstoffrest oder einen einwertigen Si-C gebundenen, unsubstituierten oder mit Heteroatomen substituierten organischen Kohlenwasserstoffrest mit 1 bis 18 C-Atomen bedeuten, der auch ein ungesättigter Kohlenwasserstoffrest sein kann,
Y eine chemische Bindung, ein Sauerstoffatom oder einen zweibis zwölfwertigen organischen unsubstituierten oder mit Heteroatomen substituierten organischen Rest mit 1 bis 24 C-Atomen bedeutet, der durch Si-C-Verknüpfung an die Siliziumatome gebunden vorliegt,
die Reste $R^1$, $R^2$ und $R^3$ unabhängig voneinander einen Wasserstoffrest oder einen gesättigten oder ungesättigten Si-C gebundenen C1 - C18 Kohlenwasserstoffrest, der unsubstituiert oder mit Heteroatomen substituiert sein kann oder einen über ein Sauerstoffatom gebundenen C1 - C12 Kohlenwasserstoffrest, der Heteroatome enthalten kann, oder einen Silanolrest bedeuten, wobei die Reste $R^1$, $R^2$ und $R^3$ ihre Bedeutung jeweils unabhängig voneinander annehmen können, so dass mehrere Reste $R^1$, $R^2$ bzw. $R^3$, die am gleichen Siliziumatom gebunden vorliegen, verschiedene Reste aus der definierten Gruppe bedeuten können,
die Reste $R^4$ unabhängig voneinander entweder einen Wasserstoffrest, einen Silanolrest oder einen einwertigen Si-C oder Si-O-C-gebundenen, unsubstituierten oder mit Heteroatomen substituierten organischen Kohlenwasserstoffrest mit 1 bis 18 C-Atomen bedeuten, der auch ein ungesättigter Kohlenwasserstoffrest sein kann,
die Reste $R^5$ unabhängig voneinander entweder einen Wasserstoffrest, einen einwertigen Si-C gebundenen, unsubstituierten oder mit Heteroatomen substituierten organischen Kohlenwasserstoffrest mit 1 bis 18 C-Atomen, der auch ein ungesättigter Kohlenwasserstoffrest sein kann oder einen Rest der Formel (II), bedeuten

$$[O_{3-a/2}R_aSiY(SiR_aO_{3-a/2})_b]_c(R^1SiO_{3/2})_d(R^2{}_2SiO_{2/2})_e(R^3{}_3SiO_{1/2})_f(SiO_{4/2})_g \qquad (II),$$

wobei bezogen auf alle Reste Y, R, $R^1$, $R^2$, $R^3$ $R^4$ und $R^5$ als 100 mol-% mindestens 0,1 mol-%, bevorzugt mindestens 3 mol-%, besonders bevorzugt mindestens 5 mol-% insbesondere mindestens 7 mol-% olefinisch oder acetylenisch ungesättigte Reste sein müssen,
bezogen auf alle Reste Y, R, $R^1$, $R^2$, $R^3$ $R^4$ und $R^3$ als 100 Gewichts-% in Summe höchstens 3 Gew.-%, bevorzugt höchstens 2,5 Gew.-%, insbesondere höchstens 2 Gew.-% Si-O-C-gebundene Reste und Silanolreste sind,
und bezogen auf alle Reste Y, R, $R^1$, $R^2$, $R^3$ $R^4$ und $R^5$ als 100 Gewichts-% in Summe höchstens 0,5 Gew.-%, bevorzugt höchstens 0,2 Gew.-%, insbesondere höchstens 0,1 Gew.-% Silanolreste sind,
a 0, 1 oder 2 ist, wobei die Indices a zu beiden Seiten der Gruppe Y ihre Bedeutung unabhängig voneinander annehmen können, so dass verschiedene a unabhängig voneinander verschiedene Werte innerhalb des angegebenen Wertebereiches bedeuten können,
b eine Zahl im Wert von 1 bis 11, vorzugsweise 1 ist,
c einen Wert von 0 bis 0,9,
d einen Wert von 0 bis 0,8,
e einen Wert von 0 bis 0,5,
f einen Wert von 0,01 bis 0,6,
g einen Wert von 0 bis 0,6,

h und j unabhängig voneinander 0, 1 oder 2 sind,
i eine ganze Zahl im Wert von 0 bis 50 und
k einen Wert von 0 bis 0,9 bedeutet, wobei
c+d+e+f+g+k = 1, mindestens ein Wert c, d oder k > 0 und e+g ≤ 0,6 vorzugsweise < 0,5, insbesondere < 0,4 ist, wobei die Reste R, $R^1$, $R^2$, $R^3$, $R^4$ und $R^5$ und die Indizes a, b, c, d, e, f, g, h und i in Formel (I) und in Formel (II) unabhängig voneinander die gleichen Bedeutungen haben und diese innerhalb der beschriebenen Wertebereiche unabhängig voneinander annehmen können,
bei dem in einem ersten Schritt Silane der Formel (III)

$$R^6{}_1SiR^7{}_{4-1} \qquad (III),$$

wobei $R^7$ eine hydrolysierbare Gruppe,
l eine ganze Zahl im Wert von 0, 1 oder 2 ist und $R^6$ für l = 1 einen Rest $R^1$ und für l = 2 einen Rest $R^2$ bedeutet, und / oder Di-, Oligo- oder Polysilane der Formel (IV)

$$R^7{}_{3-h}R^4{}_hSi(SiR^5{}_2)_iSiR^4{}_jR^7{}_{3-j} \qquad (IV),$$

wobei $R^7$ wie oben beschrieben eine hydrolysierbare Gruppe bedeutet und $R^4$, $R^5$, h, i und j die gleichen Bedeutungen haben wie oben genannt,
und / oder organylverbrückte Silicone der Formel (V)

$$R^7{}_{3-a}R_aSiY(SiR_aR^7{}_{3-a})_b \qquad (V),$$

wobei $R^7$, R, Y, a und b die bereits genannte Bedeutung haben,
mit Wasser und falls nicht mindestens einer der hydrolysierbaren Reste $R^7$ ein Halogenrest ist, unter Verwendung katalytischer Mengen einer oder mehrere die Hydrolyse und Kondensation der Komponenten gemäß der Formeln (III), (IV) und (V) fördernde Säuren in Gegenwart eines nicht wassermischbaren, aprotischen Lösemittels, das insbesondere kein Alkohol ist und auch keinen Alkohol enthält, umgesetzt werden,
wobei nach erfolgter Umsetzung sowohl die Wasser- als auch die verbleibende Säuremenge in der organischen Phase auf das technisch bedingte Minimum reduziert werden, insbesondere auf weniger als jeweils 10000 ppm, vorzugsweise weniger als jeweils 5000 ppm, insbesondere weniger als jeweils 2000 ppm, so dass sie gegebenenfalls nur noch als unerwünschte Verunreinigung vorhanden sind und
in einem zweiten Schritt das im inerten organischen Lösemittel gelöste Reaktionsprodukt aus dem ersten Schritt ohne Wasser mit einem Halogensilan der Formel (VI)

$$R^3{}_3SiR^8 \qquad (VI),$$

wobei $R^3$ die gleichen Bedeutungen hat wie oben angegeben und $R^8$ ein Halogenatom bedeutet, vorzugsweise ein Chloratom,
in Gegenwart einer Hilfsbase umgesetzt wird, wobei als Hilfsbasen vorzugsweise basische Metallsalze und Stickstoffverbindungen verwendet werden.

Überraschender Weise wurde gefunden, dass die gestellte Aufgabe durch das Verfahren zur Herstellung der Polyorganosiloxane der Formel (I) gelöst wird, das aus zwei Schritten besteht, wobei der erste Schritt eine hydrolytische Kondensation darstellt und im zweiten Schritt durch eine wasserfreie Kondensation die aus dem ersten Schritt vorhandenen Silanolgruppen reduziert werden, so dass die Polyorganosiloxanzusammensetzungen ohne die Verwendung von Metallsilikonatzwischenstufen und in einem nicht hydrolytischen Prozess erhalten werden.

Die gemäß dem erfindungsgemäßen Verfahren erhaltenen Polyorganosiloxane der Formel (I) zeichnen sich dadurch aus, dass sie weitgehend frei sind von Silanolgruppen und von siliziumgebundenen Alkoxygruppen.

Alkoxygruppen insbesondere mit kurzen Alkylgruppen und Silanolgruppen führen zu höheren dielektrischen Verlustfaktoren und tragen darüber hinaus zur Erhöhung des dielektrischen Verlustfaktors bei, indem sie Angriffspunkte für Feuchtigkeit bilden.

Polyorganosiloxane der Formel (I) umfassen im Rahmen der vorliegenden Erfindung sowohl polymere als auch oligomere Organosiloxane.

Insbesondere sind auch Strukturen der Formeln (Ia), (Ib) und (Ic) umfasst,

$$[O_{3-a/2}R_aSiY(SiR_aO_{3-a/2})_b]_c(R^3{}_3SiO_{1/2})_f \qquad (Ia),$$

$$(R^3{}_3SiO_{1/2})_f[O_{3-h/2}R^4{}_hSi(SiR^5{}_2)_iSiR^4{}_jO_{3-j/2}]_k \quad \text{(Ib)}$$

$$[O_{3-a/2}R_aSiY(SiR_aO_{3-a/2})_b]_c(R^3{}_3SiO_{1/2})_f[O_{3-h/2}R^4{}_hSi(SiR^5{}_2)_iSiR^4{}_jO_{3-j/2}]_k \quad \text{(Ic)}$$

wobei in (Ia) d, e, g und k jeweils 0 ist, in (Ib) c, d, e und g jeweils 0 ist und in (Ic) d, e und g jeweils 0 ist. In diesen Strukturen ist der Anteil an Si-O-Einheiten zugunsten von Si-C- und Si-Si-Einheiten am weitesten reduziert.

Da die Elektronegativitätsdifferenz zwischen Silizium und Sauerstoff gemäß der Elektronegativitätsskala von Allred und Rochow mit 1,76 um 1 größer ist als die Elektronegativitätsdifferenz zwischen Silizium und Kohlenstoff gemäß der gleichen Tabelle, besitzt die Si-C-Bindung eine geringere Polarität als die Si-O-Bindung. Es ist daher zu erwarten, dass der Ersatz von Si-O-Bindungen durch Si-C-Bindungen einen weiteren Beitrag zur Reduzierung der Gesamtpolarität von Organopolysiloxanen leistet und damit einen Beitrag zur Reduzierung des dielektrischen Verlustfaktors entsprechender Komponenten. Dieser Effekt ist umso ausgeprägter je mehr Si-O-Bindungen durch Si-C- oder Si-Si-Bindungen ersetzt werden können. Die Reduzierung der Polarität im Organopolysiloxangerüst beispielsweise durch die Einführung von Si-C- oder Si-Si-Bindungen anstelle von Si-O-Bindungen leistet damit einen erheblichen Beitrag zur breiten Verwendbarkeit von solchen Organopolysiloxanen und ist die bevorzugteste Ausführungsform der Erfindung.

Da die Einheiten der Form $(R^3{}_3SiO_{1/2})$ zur Reduzierung der nach der Hydrolyse verbliebenen Silanolgruppen in dem wasserfreien zweiten Schritt verwendet werden, sind diese Gruppen stets vorhanden. In der Nomenklatur, die Siliconbausteine nach M, D, T und Q-Einheiten klassifiziert, abhängig davon mit wie vielen Sauerstoffatomen ein Siliziumatom an weitere Siliziumatome gebunden vorliegt und gemäß derselben eine M-Einheit entsprechend eine Einheit der Formel $R_3SiO_{1/2}$ ist, entsprechend eine D-Einheit die Formel $R_2SiO_{2/2}$ besitzt, eine T-Einheit $R_1SiO_{3/2}$ und eine Q-Einheit $SiO_{4/2}$ ist handelt es sich bei den erfindungsgemäßen Polyorganosiloxanen im weitesten Sinne also um Kombinationen von T, D und Q-Einheiten mit M-Einheiten, also um M, MD, MT, MDT, MDTQ, MTQ und MDQ Harze, wobei hier zwischen verschieden zusammengesetzten M, D und T-Einheiten nicht unterschieden wird. Ein M-Harz, das aus verschiedenen M-Einheiten besteht, ist aus Formel (Ia) zu verstehen, wenn man für alle a den Wert 2 annimmt und Y entweder eine chemische Bindung ist oder ein Si-C-gebundener verbrückender Rest. Dann ist jedes Siliziumatom der verbrückten Einheit nur noch von einem Sauerstoffatom umgeben, das eine Bindung zu einem benachbarten Siliziumatom unterhält und daher im Sinne der allgemeinen M, D, T, Q-Nomenklatur als ein $M_2$-Baustein verstanden werden kann, bei dem zwei M-Einheiten aneinandergebunden oder durch einen verbrückenden Rest miteinander gekoppelt vorliegen. Diese strukturelle Besonderheit kettenbildender M-Einheiten sowohl aus den organisch verbrückten als auch den Di,- Oligo- bzw. Polysilaneinheiten ist in diesem Fall zu berücksichtigen.

Einfache M-Einheiten wie sie den Syntheseäquivalenten für die Einheiten der Formel $(R_3SiO_{1/2})_f$ entsprächen und wie sie in US 20180220530 verwendet werden, werden im ersten Schritt der Synthese, dem hydrolytischen Reaktionsschritt nicht verwendet. Dies ist zwar grundsätzlich möglich, bringt jedoch zur Reduzierung der Silanolgruppen nicht den gleichen Effekt wie der Einsatz dieser Gruppen im zweiten wasserfreien Syntheseschritt. Die Einheiten der Formel $(R_3SiO_{1/2})_f$ werden daher nur im zweiten wasserfreien Reaktionsschritt verwendet, um die Anzahl der Silanolgruppen zu reduzieren und dadurch eine Verbesserung gegenüber dem Stand der Technik gemäß US 20180220530 zu erzielen. Dies ist ein wesentliches unterscheidendes Merkmal der erfindungsgemäßen Vorgehensweise. In US 20180220530 werden alle die erfindungsgemäßen Polyorganosiloxane bildenden Bausteine in nur einem hydrolytischen Schritt miteinander zur Reaktion gebracht, wobei hierbei keine Möglichkeit besteht die bei der Kondensation gebildeten Silanolgruppen weiter zu reduzieren und die Bindemittel dadurch für die Zielanwendung Bindemittel für Hochfrequenzanwendungen weiter zu verbessern. Dem Umstand, dass nach einer hydrolytischen Kondensation unweigerlich Silanolgruppen am Polyorganosiloxangerüst gebunden vorliegen wird in US 20180220530 keinerlei Beachtung geschenkt, was leicht daran zu erkennen ist, dass auf eine diesbezügliche aussagekräftige analytische Beschreibung der dort erfindungsgemäßen Polyorganosiloxane gänzlich verzichtet wird. Offenbar hat sich den Erfindern die Bedeutung der genauen Zusammensetzung der Polyorganosiloxane gemäß US 20180220530 und die damit erklärbaren Struktur-Wirkungsbeziehungen und Ansatzpunkte für Verbesserungen nicht erschlossen, wenn sie diese für so unerheblich betrachten, dass sie sie nicht als erfindungsrelevant offenlegen.

Da auch auf die Möglichkeit verzichtet wird, Si-Si-gebundene oder Si-C-verbrückte Einheiten zu verwenden, um so den Anteil an polaren Bindungen im Polyorganosiloxangerüst zu reduzieren, ergibt sich durch die vorliegende Erfindung eine weitere Verbesserung gegenüber dem Stand der Technik gemäß US 20180220530.

In den Strukturen (Ia), (Ib) und (Ic) ist der Anteil an Si-C gebundenen verbrückenden organischen Resten, bzw. Si-Si-Bindungen, die naturgemäß ebenfalls unpolar sind, besonders hoch und die Struktur wird praktisch nur noch durch die terminierenden Einheiten $(R^3{}_3SiO_{1/2})_f$ abgeschlossen.

Beispiele für R, $R^1$, $R^2$ ,$R^3$, $R^4$ und Reste $R^5$ ausgenommen den Resten $R^5$, die Reste der Formel (II) bedeuten, sind gesättigte oder ungesättigte Kohlenwasserstoffreste, die aromatische oder aliphatische Doppelbindungen enthalten können, z. B. Alkylreste, wie der Methyl-, Ethyl-, n-Propyl-, iso-Propyl-, n-Butyl-, iso-Butyl-, tert.- Butyl-, n-Pentyl-, iso-Pentyl-, neo-Pentyl- und der tert.- Pentylrest, Hexyl-reste, wie der n-Hexylrest, Heptylreste, wie der n-Heptylrest, Octylreste, wie der n-Octylrest und iso- Octylreste, wie der 2, 2, 4-Trimethylpentyl- und der 2- Ethylhexylrest, Nonylreste,

wie der n-Nonylrest, Decylreste, wie der n-Decylrest, Dodecylreste, wie der n-Dodecylrest, Tetradecyl-reste, wie der n-Tetradecylrest, Hexadecylreste, wie der n-Hexadecylrest und Octadecylreste, wie der n-Octadecylrest, Cycloalkylreste, wie Cyclopentyl-, Cyclohexyl- und 4-Ethylcyclohexylrest, Cycloheptylreste, Norbornylreste und Methylcyclohexylreste, Arylreste, wie der Phenyl-, Biphenyl-, Naphthyl- und Anthryl- und Phenanthrylrest; Alkaryl- reste, wie o-, m-, p-Tolylreste, Xylylreste und Ethylphenyl- reste; Aralkylreste, wie der Benzylrest, Alkenylreste, wie der 7-Octenyl-, 5-Hexenyl-, 3-Butenyl-, Allyl- und der Vinylrest sowie der alpha- und der β-Phenylethylrest.

Bevorzugte Heteroatome, die in den Resten R, $R^1$, $R^2$, $R^3$, $R^4$ und $R^5$ enthalten sein können, sind Sauerstoffatome.

Darüber hinaus sind auch Stickstoffatome, Phosphoratome, Schwefelatome und Halogenatome wie Chloratome und Fluoratome möglich, aber nicht bevorzugt.

Beispiele für bevorzugte Heteroatome enthaltende organische Reste R, $R^1$, $R^2$, $R^3$, $R^4$ und $R^5$ sind Reste die Acryloyloxy-, bzw. Methacryloyloxyreste von Acrylsäure oder Methacrylsäure sowie Acrylsäureestern oder Methacrylsäureestern von unverzweigten oder verzweigten Alkoholen mit 1 bis 15 C-Atomen enthalten. Bevorzugte solche Reste sind diejenigen, die sich aus Methylacrylat, Methylmethacrylat, Ethylacrylat, Ethylmethacrylat, Propylacrylat, Propylmethacrylat, n-Butylacrylat, n-Butylmethacrylat, iso-Butylacrylat, iso-Butylmethacrylat, t-Butylacrylat, t-Butylmethacrylat, 2-Ethylhexylacrylat und Norbornylacrylat ableiten. Besonders bevorzugt sind Methylacrylat, Methylmethacrylat, n-Butylacrylat, iso-Butylacrylat, t-Butylacrylat, 2-Ethylhexylacrylat, und Norbornylacrylat. Diese Reste sind vorzugsweise nicht direkt an das Siliziumatom gebunden, sondern sind über einen Kohlenwasserstoffspacer gebunden, der 1 bis 12 Kohlenstoffatome umfassen kann, wobei er vorzugsweise 1 oder 3 Kohlenstoffatome umfasst und außer den Heteroatomen, die im Acryloyloxy- bzw. Methacryloyloxyrest enthalten sind, keine weiteren Heteroatome umfasst. Vorzugsweise werden die Reste R, $R^1$, $R^2$, $R^3$, $R^4$ und $R^5$ ausgewählt aus Methyl- Phenyl-, Vinyl-, Acryloyloxy- und Methacryloyloxyresten sowie den Acrylsäureestern oder Methacrylsäureestern von unverzweigten oder verzweigten Alkoholen mit 1 bis 15 C-Atomen.

Weitere bevorzugte Heteroatome umfassende Reste R, R1, R2 und R3 sind solche der Formel (VII).

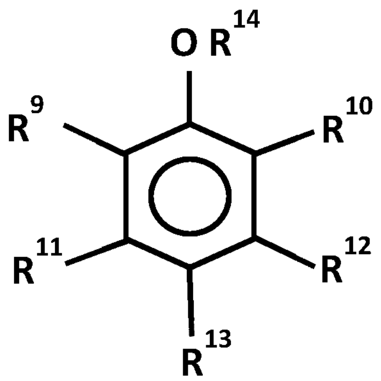

(VII)

In Formel (VII) bedeuten $R^9$, $R^{10}$, $R^{11}$, $R^{12}$, $R^{13}$ und $R^{14}$ unabhängig voneinander ein Wasserstoffradikal, eine Kohlenwasserstoffgruppe oder eine mit Fremdatomen substituierte Kohlenwasserstoffgruppe, wobei stets mindestens einer der Reste $R^9$, $R^{10}$, $R^{11}$, $R^{12}$, $R^{13}$ und $R^{14}$ eine Kohlenwasserstoffgruppe bedeutet, die über eine Si-C oder eine Si-O-C-Bindung an das Siliziumatom gebunden vorliegt, wobei es bevorzugt ist, dass diese Kohlenwasserstoffgruppe, über die der Rest der Formel (VII) an ein Siliziumatom gebunden ist, eine C3-Kohlenwasserstoffgruppe ist, die keine Heteroatome enthält. Alternativ kann der Rest $R^9$, $R^{10}$, $R^{11}$, $R^{12}$, $R^{13}$ und $R^{14}$ auch eine chemische Bindung sein, so dass der Rest der Formel (II) über diesen Rest, der eine chemische Bindung darstellt über eine Si-C-Bindung direkt an das Siliziumatom gebunden vorliegt.

Beispiele für Reste $R^9$, $R^{10}$, $R^{11}$, $R^{12}$, $R^{13}$ und $R^{14}$ sind der Wasserstoffrest, gesättigte Kohlenwasserstoffreste wie der Methyl, Ethyl, n-Propyl, iso-Propyl, der primäre, sekundäre und tertiäre Butylrest, der Hydroxyethylrest, aromatische Reste wie der Phenylethylrest, der Phenylrest, der Benzylrest, der Methylphenylrest, der Dimethylphenylrest, der Ethylphenylrest heteroatomhaltige Reste wie der Hydroxymethylrest, der Carboxyethylrest, der Methoxycarbonylethylrest und der Cyanoethylrest und Acrylat- und Methacrylatreste, wie Methylacrylat, Methylmethacrylat, Ethylacrylat, Ethylmethacrylat, Propylacrylat, Propylmethacrylat, n-Butylacrylat, n-Butylmethacrylat, iso-Butylacrylat, iso-Butylmethacrylat, t-Butylacrylat, t-Butylmethacrylat, 2-Ethylhexylacrylat und Norbornylacrylat, olefinisch oder acetylenisch ungesättigte Kohlenwasserstoffreste.

Gegebenenfalls können die benachbarten Reste $R^9$ und $R^{11}$ sowie die benachbarten Reste $R^{10}$ und $R^{12}$ auch miteinander zu dem gleichen cyclischen gesättigten oder ungesättigten Rest verbunden sein, so dass annelierte polycyclische Strukturen entstehen.

Beispiele für Phenolreste der Formel (VII) sind der Phenolrest, der ortho-, meta- oder para-Cresolrest, 2,6-, 2,5-, 2,4- oder 3,5-Dimethylphenolrest, 2-Methyl-6-Phenylphenolrest, 2,6-Diphenylphenolrest, 2,6-Diethylphenolrest, 2-Methyl-6-ethylphenolrest, 2,3, 5-, 2,3,6- oder 2,4,6-Trimethylphenolrest, 3-Methyl-6-tertiär-Butylphenolrest, Thymolrest und 2-Methyl-6-allylphenolrest, die gegebenenfalls am Sauerstoffatom substituiert sein können.

Bevorzugte Beispiele für fluorhaltige Reste sind der Trifluorpropyl-, der Nonafluorhexyl- und der Heptadecafluoroctylrest.

Y ist vorzugsweise eine verbindende organische Einheit mit 1 bis 24 C-Atomen zwischen zwei bis zwölf Siloxanyleinheiten. Bevorzugt ist Y zwei-, drei- oder vierwertig, insbesondere zweiwertig.

Bevorzugte verbrückende aromatische Reste Y sind solche der Formel (VIIIa), (VIIIb) und (VIIIc)

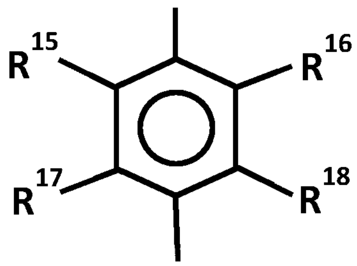

(VIIIa)

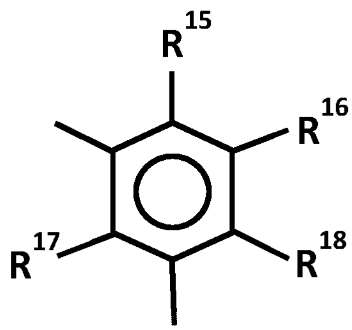

(VIIIb)

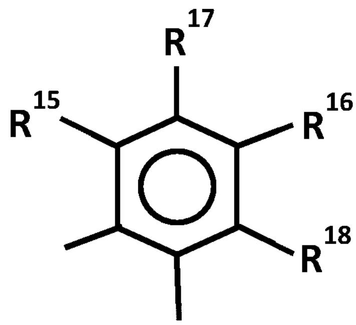

(VIIIc)

wobei die Reste $R^{15}$, $R^{16}$, $R^{17}$ und $R^{18}$ einen Wasserstoffrest bedeuten können oder einen gegebenenfalls substituierten Kohlenwasserstoffrest oder eine Gruppe der Formel $OR^{19}$ wobei $R^{19}$ einen Kohlenwasserstoffrest bedeutet. Dabei können benachbarte Reste wie beispielsweise $R^{15}$ und $R^{17}$ oder $R^{16}$ und $R^{18}$ in Formel (VIIIa) miteinander zu cyclischen Resten gekoppelt vorliegen, so dass annelierte Ringsysteme entstehen.

Typische Beispiele solcher verbrückender aromatischer Reste sind der p-, m- oder o-Phenylenrest, der 2-Methyl-1,4-Phenylenrest, der 2-methoxy-1,4-Phenylenrest, wobei der p-Phenylenrest besonders bevorzugt ist.

Es können auch mehrere solcher Reste miteinander gekoppelt sein, so dass beispielsweise zwei oder mehr Einheiten der Formel (IIIa) miteinander gekoppelt vorliegen und dieses oligomere verbrückende Strukturelement durch Anbindung der entsprechenden Kohlenstoffatome der terminalen aromatischen Ringe an Siliziumatom vorliegt. Die aromatischen Einheiten können dabei direkt aneinander gebunden vorliegen oder sie können durch eine verbrückende Gruppe wie eine Alkandiyleinheit, wie beispielsweise der Methylengruppe, der 1,2-Ethandiylgruppe, 1,1-Ethandiylgruppe, der 2,2-Dimethylpropylgruppe oder einer Sulfongruppe miteinander gekoppelt sein.

Weitere Beispiele für aromatische verbrückende Einheiten sind solche, bei denen zwei gegebenenfalls substituierte Phenolringe, die über eine Alkandiyl- oder andere Einheiten verbrückt sind. Typische Vertreter sind am Phenolsauerstoff substituierte 2,2-Bis(4-hydroxyphenyl)propanreste (substituierte Bisphenol A Reste), 2,2-Bis(4-hydroxyphenyl)methanreste (subsituierte Bisphenol F Reste), Bis(4-hydroxyphenyl)sulfonreste (Bisphenol S Reste) wobei die Phenolsauerstoffatome typischerweise mit Resten der Art - $(C_3H_6)$- substituiert sind, wobei die Reste -$(C_3H_6)$- an Siliziumatome Si-C gebunden sind, wodurch die Verbrückung entsteht.

Bevorzugte nicht durch eine aromatische Einheit verbrückte Reste Y sind Alkandiyl-, Alkendiyl- und Alkindiylreste, die gegebenenfalls Heteroatome enthalten können und die aromatische Gruppen als Substituenten enthalten können, die in diesen Resten jedoch nicht die Aufgabe der Verbrückung übernehmen oder dazu beitragen.

Typische Beispiele sind der Methylenrest, der Methinrest, der vierwertige Kohlenstoff, die 1,1-Ethandiyl- und die 1,2-Ethandiylgruppe, die 1,4 Butandiyl- und die 1,3-Butandiylgruppe, die 1,5 Pentandiyl-, 1,6-Hexandiyl, 1,7-Heptandiyl-, 1,8-Octandiyl-, 1,9-Nonadiyl-, 1,10-Decandiyl-1,11-Undecandiyl- und die 1,12-Dodecandiylgruppe, die 1,2-Diphenylethandiylgruppe, die 1,2-Phenylethandiyolgruppe und die 1,2-Cyclohexylethandiylgruppe. Sofern eine lineare verbrückende Einheit mehr als ein Kohlenstoffatom besitzt und es das Substitutionsmuster zulässt, kann jede dieser Gruppen außer durch die alpha-omega Konnektivität, also die Verbrückung durch das jeweils erste und letzte Atom einer linearen Einheit auch durch jede andere Konnektivität, also die Verwendung anderer Ketten-C-Atome verbrückend wirken. Zudem sind typische Beispiele nicht nur die linearen Vertreter der genannten verbrückenden Kohlenwasserstoffe, sondern auch deren Isomere, die wiederum durch Anbindung unterschiedlicher C-Atome der Kohlenwasserstoffstruktur an Siliziumatome verbrückend wirken können.

Beispiele für insbesondere bevorzugte Reste aus der Gruppe der nicht aromatischen heteroatomfreien Kohlenwasserstoffreste sind $-CH_2CH_2-$, $-CH(CH_3)-$, -CH=CH-, $-C(=CH_2)-$ und -C≡C-.

Beispiele für typische fluorsubstituierte verbrückende Reste Y sind der $-C(CF_3)_2-$, der -C(H)F-C(H)F- und der $-C(F_2)-C(F_2)$-Rest.

Beispiele für typische heteroatomhaltige verbrückende Reste sind beispielsweise der Ethylenoxypropylenrest und der Ethylenoxybutylenrest. Auch beidseitig $-(CH_2)_n-$ oder $-CH_2-CH(R^{15})-C(=O)O$-terminierte, wobei n typischerweise 3 bis 8 ist und $R^{15}$ ein Wasserstoffatom oder eine Methylgruppe bedeutet und über diese terminale Gruppe an die Siliziumatome gebundene Glykolreste oder Phenylenetherreste sind typische Beispiele.

Alle Aufzählungen sind nur beispielhaft und nicht einschränkend zu verstehen.

Die erfindungsgemäß verwendeten Organopolysiloxane können in Abhängigkeit der durchschnittlichen Anzahl der sie bildenden Struktureinheiten pro Molekül in ihrer Viskosität über einen weiten Bereich variieren oder auch Feststoffe sein.

Flüssige erfindungsgemäß verwendbare Organopolysiloxane besitzen im unvernetzten Zustand bei 25°C Viskositäten von 20 bis 8 000 000 mPas, bevorzugt von 20 bis 5 000 000 mPas, insbesondere von 20 bis 3 000 000 mPas.

Feste erfindungsgemäß verwendbare Organopolysiloxane besitzen im unvernetzten Zustand Glasübergangstemperaturen im Bereich von 25°C bis 250°C, bevorzugt von 30°C bis 230°C, insbesondere von 30°C bis 200°C. Als besonders geeignet haben sich solche Organopolysiloxane erwiesen, die verbrückende Phenyleneinheiten besitzen und die insgesamt einen aromatischen Anteil von mindestens 20 mol-% bezogen auf alle Si-C-gebundenen Substituenten als 100 mol-% besitzen. Unter Phenyleneinheiten werden dabei sowohl monomere als auch oligomere und substituierte sowie unsubstituierte Phenyleneinheiten verstanden, wie sie in den Beispielen für die Art der verbrückenden Substituenten dieses Typs illustrierend beschrieben sind.

Ausgewählte Beispiele für Reste $R^5$ der Formel (II) sind lineare und cyclische Strukturen der durchschnittlichen Zusammensetzung

$[O_{2/2}MeSi-CH_2-CH_2-SiMeO_{2/2}][(CH_2=CH)(Me)_2SiO_{1/2}]_3$,
$[O_{2/2}MeSi-CH_2-CH_2-SiMeO_{2/2}][(H)(Me)_2SiO_{1/2}]_3$,
$[O_{2/2}MeSi-CH_2-CH_2-SiMeO_{2/2}]_2[(CH_2=CH)(Me)_2SiO_{1/2}]_5$,
$[O_{2/2}MeSi-CH_2-CH_2-SiMeO_{2/2}]_2[(H)(Me)_2SiO_{1/2}]_5$,
$[O_{2/2}PhSi-C_6H_4-SiPhO_{2/2}][(CH_2=CH)(Me)_2SiO_{1/2}]_3$,
$[O_{2/2}PhSi-C_6H_4-SiPhO_{2/2}][(H)(Me)_2SiO_{1/2}]_3$,
$[O_{2/2}PhSi-C_6H_4-SiPhO_{2/2}]_2[(CH_2=CH)(Me)_2SiO_{1/2}]_5$,
$[O_{2/2}PhSi-C_6H_4-SiPhO_{2/2}]_2[(H)(Me)_2SiO_{1/2}]_5$.
$[O_{2/2}MeSi-C_6H_4-SiMeO_{2/2}][(CH_2=CH)(Me)_2SiO_{1/2}]_3$,
$[O_{2/2}MeSi-C_6H_4-SiMeO_{2/2}][(H)(Me)_2SiO_{1/2}]_3$,
$[O_{2/2}MeSi-CH_2-CH_2-SiMe_2O_{1/2}]_8[(CH_2=CH)(Me)_2SiO_{1/2}]_9$,
$[O_{2/2}MeSi-CH_2-CH_2-SiMeO_{2/2}]_8[(CH_2=CH)(Me)_2SiO_{1/2}]_8[(H)(Me)_2SiO_{1/2}]_9$, $(CH_2=CH)(Me)2SiO_{1/2}$,
$(H)\ (Me)\ 2SiO_{1/2}$,
$(CH_3-CH(=CH2)C(=O)O-CH_2CH_2CH_2)(Me)_2SiO_{1/2}$,
$(Me)_3SiO_{1/2}$,
$(CH_2=CH)_3SiO_{1/2}$,
$(CH_2=CH)Ph_2SiO_{1/2}$.

Beispiele für bevorzugte hydrolysierbare Reste $R^7$ und $R^8$ sind eine Halogen-, Säure- oder Alkoxygruppe, besonders bevorzugt eine Chlor-, Acetat-, Formiat-, Methoxy- oder Ethoxygruppe.

Die Verbindungen (VI) werden nach Verfahren gemäß Stand der Technik erhalten, wobei die anzuwendenden Reaktionstypen stark von der Zusammensetzung der jeweiligen Verbindung (VI) abhängen. Typischerweise werden Verbindungen (VI) beispielsweise aus olefinisch ungesättigten organischen Vorstufen, wie beispielsweise Acetylen, Diallyl- oder Divinylverbindungen und Si-H-funktionellen Siliconbausteinen durch Hydrosilylierung erhalten.

Auch Grignardreaktionen aus halogenierten organischen Vorstufen und anschließende Umsetzung mit halogenierten oder alkoxylierten Organosilanen sind hier denkbare Verfahren. Gegebenenfalls können auch Metallhalogenidaustauschreaktionen halogenierter organischer Vorstufen mit Alkylalkalimetallverbindungen, wie etwa Butyllithium und bekannte Folgereaktionen zur Verknüpfung mit Siliconbausteinen Anwendung finden. Dem Fachmann sind solche Verfahren bekannt und aus der verfügbaren Literatur leicht zugänglich und nachvollziehbar. Da diese Verfahren nicht erfindungsgegenständlich sind, sei dazu an dieser Stelle lediglich der Verweis auf den dokumentierten und recherchierbaren Stand der Technik gegeben.

Vorzugsweise wird der erste Verfahrensschritt, die Cohydrolyse so ausgeführt, dass ein Gemisch aus den Verbindungen (III), (IV), (V) und (VI) soweit sie verwendet werden, unter Kühlung in Wasser oder verdünnte Säuren dosiert wird. Bei gasförmigen Säuren wie HCl ist eine Dosierung in eine konzentrierte wässrige HCl-Lösung ebenfalls sinnvoll, wenn die freiwerdende Säure als Gas zurückgewonnen werden soll. Je nach der Natur der hydrolysierbaren Gruppen $R^7$ ist die Hydrolyse mehr oder weniger stark exotherm, so dass sowohl im Interesse der sicheren Ausführung der Reaktionen

als auch gegebenenfalls zur Vermeidung von Nebenreaktionen in entsprechenden Sequenzen der Synthesen Kühlung erforderlich ist. Zur Vervollständigung der Reaktionen kann es hingegen vorteilhaft und erforderlich sein, erhöhte Temperaturen anzuwenden.

Die Reaktionszeiten sind im Fall von Chlorsilanen in der Regel sehr kurz, so dass die zur Durchführung des Verfahrens im Batchbetrieb benötigte Zeit hauptsächlich von der Kühlleistung abhängt. Alternativ kann die Cohydrolyse von (III), (IV) und / oder (V) auch kontinuierlich durchgeführt werden, wofür sich sowohl Loop, als auch Kolonnenreaktoren sowie Rohrreaktoren anbieten.

Zur Abreicherung von Restsäuren ist gutes Waschen mit Wasser, saubere Phasentrennung sowie Reinigung des Hydrolyseprodukts unter vermindertem Druck vorteilhaft.

Das Verfahren kann bei Normaldruck durchgeführt werden. Je nach Zielsetzung ist aber höherer oder niedrigerer Druck ebenfalls praktikabel. Es ist wesentlich, dass zum Abschluss des ersten Verfahrensschrittes die Menge an vorhandenem Wasser soweit reduziert wird, dass höchstens noch Restmengen von Wasser vorliegen, die als unbeabsichtigte Verunreinigung nach Methoden gemäß Stand der Technik nicht weiter abgereichert werden können. Im Idealfall wird die verbleibende Menge Restwasser so weit reduziert, dass sie unterhalb der Nachweisgrenze liegt, so dass von einem wasserfreien Medium auszugehen ist. Diese Abreicherung von Wasser ist für die erfolgreiche Umsetzung des erfindungsgemäßen Verfahrens erforderlich, weil Wasser grundsätzlich die Option zur Bildung von Silanolgruppen mit sich bringt, sofern Bedingungen gegeben sind, unter denen Polyorganosiloxane mit Wasser reagieren können, also üblicherweise saure oder basische Bedingungen. Da es gilt Silanolgruppen abzureichern, ist die Gegenwart von Wasser im nächsten Schritt schädlich. Im weiteren Text wird die von Wasser abgereicherte Reaktionsmischung aus dem ersten Schritt als wasserfrei bezeichnet.

Der zweite Verfahrensschritt wird mit der wasserbefreiten Reaktionsmischung aus dem ersten Schritt ausgeführt. Die Silanolgruppen am Polyorganosiloxan aus dem ersten Schritt werden mit Silanen der Formel (VI) zur Reaktion gebracht, indem diese gegebenenfalls in einem inerten Lösemittel gelöst zudosiert werden. Um die Reaktion in Gang zu bringen und zu beschleunigen wird vorteilhafterweise eine Hilfsbase eingesetzt. Grundsätzlich ist die Reaktion zwischen den Silanolgruppen und den Silanen der Formel (VI) auch ohne Hilfsbase möglich, allerdings ist die Reaktionsgeschwindigkeit dann so gering, dass die Umsetzung im technischen Maßstab aufgrund der langen Reaktionszeit unwirtschaftlich wäre oder zu geringen Umsätzen führen würde. Der Rest $R^8$ bedeutet einen Halogenrest, insbesondere einen Chloridrest.

Als Hilfsbase zum Abfangen des gebildeten Halogenwasserstoffs eignen sich basische Salze oder stickstoffhaltige Verbindungen wie Amine, Harnstoffe, Imine, Guanidine und Amide. Beispiele für basische Salze sind Natriumhydrid, Natriumamid, Natriumcarbonat, Natriumhydrogencarbonat, Kaliumcarbonat, Kaliumhydrogencarbonat, Calciumcarbonat, Calciumhydrogencarbonat, Calciumoxid, Magnesiumoxid, Magnesiumcarbonat. Beispiele für stickstoffhaltige Verbindungen sind Ammoniak, Ethylamin, Butylamin, Triethylamin, Trimethylamin, Tributylamin, N,N-Dimethyldecylamin, Triisooctylamin, Harnstoff, Tetramethylharnstoff, Guanidin, Tetramethylguanidin, N-Methylimidazol, N-Ethylimidazol, Piperidin, Pyridin, Picolin, N-Methylmorpholin. Vorzugsweise kommen Aminverbindungen zum Einsatz, bei denen die Stickstoffatome keine Wasserstoffatome tragen.

Vorzugsweise wird die Hilfsbase mindestens äquimolar bezüglich des Halogensilans eingesetzt. Pro Mol-Äquivalent Halogensilan werden vorzugsweise mindestens 0,5, besonders bevorzugt mindestens 1,0, insbesondere mindestens 2,0 Basenäquivalente Hilfsbase eingesetzt. Es können auch größere Zusatzmengen Hilfsbase eingesetzt werden, z.B. wenn diese gleichzeitig als Lösemittel dienen soll. Meist bringt dies jedoch keinen Vorteil, sondern reduziert die Raum-Zeit-Ausbeute und damit die Wirtschaftlichkeit des Verfahrens. Bevorzugt wird das Halogensilan in die wasserfreie Reaktionsmischung aus dem ersten Schritt des Verfahrens zugegeben und die Hilfsbase anschließend zudosiert. Gegebenenfalls kann diese Vorgehensweise auch umgekehrt werden, so dass die Hilfsbase zuerst zu der Reaktionsmischung aus dem ersten Syntheseschritt zugegeben wird und das Halogensilan anschließend zudosiert wird.

Es können auch Gemische mehrerer Hilfsbasen verwendet werden.

Vorzugsweise wird das oder die Halogensilane der Formel (VI) so eingesetzt, dass eine zu den Silanolresten an der Polyorganosiloxanspezies aus dem ersten Reaktionsschritt äquimolare Menge Halogenidreste vorliegt.

Die Umsetzung des oder der Halogensilane der Formel (VI) mit den Silanolresten der Polyorganosiloxanspezies aus dem ersten Reaktionsschritt erfolgt vorzugsweise bei einer Temperatur von mindestens -20°C, besonders bevorzugt von mindestens 0°C, insbesondere von mindestens 10°C. Die maximal zulässige Temperatur ergibt sich darüber hinaus aus dem Siedepunkt des verwendeten Lösemittels und des oder der Halogensilane der Formel (VI), wobei die Reaktionstemperatur vorzugsweise 200°C nicht überschreitet, besonders bevorzugt 175°C, insbesondere 150°C.

Die Reaktionsmischung kann bedarfsweise gekühlt oder geheizt werden, gegebenenfalls können einzelne Reaktionskomponenten vorab auf Temperatur eingestellt werden, bevor sie miteinander zur Reaktion gebracht werden, z.B. um die Reaktionswärme nutzen zu können. Das Verfahren kann sowohl batchweise in Rührwerksreaktoren als auch kontinuierlich in Kolonnen-, Schleifen-, Wirbelbett- oder Rohrreaktoren ausgeführt werden. Bei der Reaktion gegebenenfalls entstehende niedermolekulare Siloxane können vom Reaktionsgemisch bedarfsweise destillativ abgetrennt werden. Die bei der Reaktion gebildeten Halogenidsalze können abdekantiert, abfiltriert oder abzentrifugiert oder in Wasser gelöst

und abgetrennt werden. Für die wässrige Aufarbeitung kann die Menge an bereits vorhandenes Lösemittel bedarfsweise angepasst werden, beispielsweise, um durch Einstellung von Dichteunterschieden die Phasentrennungen zu erleichtern oder es können weitere Lösemittel zugesetzt werden, deren Löslichkeit bzw. Mischbarkeit mit Wasser möglichst gering ist, insbesondere maximal 5 Gew.-% bei 25°C.

Vorzugsweise wird ein gegebenenfalls vorhandener Überschuss Halogensilan der Formel (VI) vor der wässrigen Aufarbeitung destillativ abgetrennt. Dadurch wird die Gegenwart einer wässrigen sauren Lösung verhindert, die gegebenenfalls wieder zur Bildung von Silanolgruppen am Polyorganosiloxan führen könnte.

Der zweite Reaktionsschritt wird vorzugsweise unter Feuchtigkeitsausschluss ausgeführt, also in einer getrockneten Atmosphäre oder unter reduziertem Druck, besonders bevorzugt unter Inertgas wie Argon, Stickstoff, Kohlendioxid oder Magerluft, bevorzugt bei 900 bis 1100 hPa.

Als aprotische Lösemittel sowohl für den ersten als auch den zweiten Schritt eignen sich insbesondere aromatische Kohlenwasserstofflösemittel wie Benzol, Toluol, o-Xylol, m-Xylol, p-Xylol, Ethylbenzol oder Gemische derselben. Abhängig von den gewählten Resten können gegebenenfalls auch aliphatische oder cycloaliphatische Lösemittel, sowie lineare oder cyclische Ether verwendet werden. Über die Eignung des Lösemittels entscheidet seine Lösefähigkeit für die entstehenden Polyorganosiloxane. Das Lösemittel muss das entstehende Polyorganosiloxan ausreichend gut lösen, darf mit Wasser nicht mischbar sein, d.h. es darf selbst nicht mehr als 5 Gew.-% Wasser lösen können und darf an der Reaktion nicht teilnehmen.

Gegebenenfalls ist die Eignung des Lösemittels durch geeignete Experimente zu bestimmen. Aromatische Lösemittel erfüllen die genannten Bedingungen am besten und sind daher bevorzugt.

Es sei an dieser Stelle darauf hingewiesen, dass die Verwendung von Disiloxanen, die in der Regel als symmetrische Disoloxane verwendet werden, zur Reduzierung der Silanolgruppenzahl als nicht erfindungsgemäß ausgeschlossen ist. Disiloxane spalten zwar in Gegenwart von Säuren durch Bruch der Si-O-Si-Bindung, jedoch werden dafür die Säuren in der Regel als wässrige Zubereitung eingesetzt, wodurch absichtlich Wasser in den zweiten Schritt der Synthese eingeführt würde, wodurch die Neigung Silanolgruppen nachzubilden nicht ausgeschlossen werden kann und der zweite Schritt nicht mehr wasserfrei und in seiner Effizienz reduziert wäre.

Die Polyorganosiloxane der Formel (I) sind chemisch härtbar, d.h. sie können durch eine chemische Reaktion zu einem vernetzten unlöslichen Netzwerk ausgehärtet werden. Die Härtung erfolgt über die olefinisch ungesättigten Gruppen, die weiter oben beschrieben sind. Typischerweise kommt dabei entweder eine radikalische Polymerisationsreaktion zur Härtung zum Einsatz oder falls neben den olefinisch oder acetylenisch ungesättigten funktionellen Gruppen auch siliziumgebundener Wasserstoff als Rest vorliegt, eine Hydrosilylierungshärtung.

Die Polyorganosiloxane der Formel (I) besitzen alle olefinische funktionelle Gruppen, über welche sie chemisch vernetzbar sind. Mögliche chemische Vernetzungsreaktionen umfassen dabei die bekannten Reaktionen gemäß Stand der Technik, insbesondere die radikalische Vernetzung, die sowohl unter Verwendung geeigneter Strahlenquellen wie UV-Licht als auch durch instabile zu Radikalen zerfallende chemische Verbindungen initiiert werden kann und die Additionsvernetzung beispielsweise durch eine Hydrosilylierung der olefinisch ungesättigten Gruppe mit einer Si-H Funktion in Gegenwart eines geeigneten Hydrosilylierungskatalysators durchgeführt wird.

Um eine ausreichende Härtung zu erreichen, muss eine ausreichende Menge funktioneller Gruppen vorhanden sein. Mindestens müssen je erfindungsgemäß verwendetem Polyorganosiloxan Molekül durchschnittlich 1,0 funktionelle Gruppen vorhanden sein, um eine ausreichende Härtung zu erreichen, bevorzugt sind durchschnittlich mindestens 1,1 insbesondere durchschnittlich mindestens 1,2 funktionelle Gruppen je erfindungsgemäßem Polyorganosiloxan Molekül vorhanden. Dabei können die funktionellen Gruppen verschieden sein, so dass beispielsweise ein Teil der funktionellen Gruppen eine Si-H-Gruppe ist und ein anderer Teil der funktionellen Gruppen eine olefinisch ungesättigte Gruppe darstellt, die radikalisch härtbar oder hydrosilylierbar ist. Auch weitere Kombinationen komplementärer funktioneller Gruppen sind denkbar, wobei komplementär bedeutet, dass die gewählten Kombinationen funktioneller Gruppen miteinander reagieren können. Falls nur eine Art funktioneller Gruppen vorhanden ist, beispielsweise nur olefinisch oder acetylenisch ungesättigte funktionelle Gruppen, die radikalisch härtbar sind, so muss die entsprechende Anzahl dieser funktionellen Gruppen gegeben sein. Im Sinne einer Copolymerisation zu einer homogenen Matrix ist dabei zu beachten, dass eine ausreichende Copolymerisierbarkeit der gewählten olefinischen und acetylenischen Gruppen gegeben ist. Auch die Kombination nicht miteinander copolymerisierbarer olefinischer Gruppen ist möglich, sofern die erzielte Matrix aus zwei oder gegebenenfalls mehr individuellen Polymeren miteinander verträglich bleibt und keine separaten Phasen bildet, die sich in unterscheidbaren Domänen voneinander trennen.

Als Beispiele für geeignete Initiatoren, um die radikalische Polymerisation zu starten, seien hier insbesondere Beispiele aus dem Feld der organischen Peroxide genannt, wie Di-tert.-butylperoxid, Dilaurylperoxid, Dibenzoylperoxid, Dicumylperoxid, Cumylperoxyneodecanoat, tert-Butylperoxyneodecanoat, tert-Amylperoxypivalat, tert-Butylperoxypivalat, tert-Butylperoxyisobutyrat, tert-Butylperoxy-3,5,5-trimethylhexanoat, tert-Butylcumylperoxid, tert-Butylperoxyacetat, tert-Butylperoxybenzoat, 1,1-Ditert.-butylperoxycyclohexan, 2,2-Di(tert.-butylperoxy)butan, Bis(4-tert.-butylcyclohexyl)peroxydicarbonat, Hexadecylperoxydicarbonat, Tetradecylperoxydicarbonat, Dibenzylperoxidicarbonat, Diisopropylbenzol Dihydroperoxid, [1,3-Phenylenbis(1-methylethyliden)]bis[tert-butyl]peroxid, 2,5-Dimethyl-2,5-di-(tert-butylperoxy)hexan, Dicetylperoxydicarbonat, Acetylacetonperoxid, Acetylcyclohexansulfonylperoxid, tert.-Amylhydroperoxid, tert-Amylperoxy-2-ethylhexanoat, tert-Amylperoxy-2-ethylhexylcarbonat, tert-Amylperoxyisopropylcarbonat, tert-Amylperoxyneodecanat, tert-Amylperoxy-3,5,5-trimethylhexanoat, tert-Butylmonoperoxymaleat, wobei diese Aufzählung nur illustrierend ist und nicht beschränkend. Gegebenenfalls können auch Mischungen aus verschiedenen Initiatoren für radikalische Reaktionen verwendet werden. Die Eignung eines Initiators bzw. Initiatorgemisches für radikalische Reaktionen hängt von dessen Zerfallskinetik und den zu erfüllenden Anforderungsbedingungen ab. Unter ausreichender Beachtung dieser Rahmenbedingungen gelingt dem Fachmann die geeignete Auswahl eines Initiators.

Bei Zubereitungen, die neben olefinisch und acetylenisch ungesättigten Gruppen auch siliziumgebundenen Wasserstoff enthalten, besteht die Möglichkeit der Härtung durch eine Hydrosilylierungsreaktion. Geeignete Katalysatoren zur Förderung der Hydrosilylierungsreaktion sind die bekannten Katalysatoren aus dem Stand der Technik.

Beispiele für solche Katalysatoren sind Verbindungen oder Komplexe der Gruppe der Edelmetalle, enthaltend Platin, Ruthenium, Iridium, Rhodium und Palladium, vorzugsweise Metallkatalysatoren aus der Gruppe der Platinmetalle oder Verbindungen und Komplexe aus der Gruppe der Platinmetalle. Beispiele für solche Katalysatoren sind metallisches und feinverteiltes Platin, das sich auf Trägern wie Siliziumdioxid, Aluminiumoxid oder Aktivkohle befinden kann, Verbindungen oder Komplexe von Platin wie Platinhalogenide, z.B. $PtCl_4$, $H_2PtCl_6x6H_2O$, $Na_2PtCl_4x4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukte aus $H_2PtCl_4x6H_2O$ und Cyclohexanon, Platin-Vinyl-Siloxankomplexe, wie Platin-1,3-Divinyl-1,1,3,3-tetramethyldisiloxan, mit oder ohne Gehalt an nachweisbarem anorganisch gebundenem Halogen, Bis-(gamma-picolin)platinchlorid, Trimethylendipyridinplatinchlorid, Dicyclopentadienplatindichlorid, Dimethylsulfoxyethenylplatin(II)dichlorid, Cyclooctadienplatindichlorid, Norbornadienplatindichlorid, Gammapicolinplatindichlorid, Cyclopentadienplatindichlorid, sowie Umsetzungsprodukte von Platintetrachlorid mit Olefin und primärem oder sekundärem Amin oder primärem und sekundärem Amin wie das Umsetzungsprodukt aus in 1-Octen gelöstem Platintetrachlorid mit sec-Butylamin oder

Ammoniumplatinkomplexe. In einer weiteren Ausführungsform des erfindungsgemäßen Verfahrens werden Komplexe des Iridiums mit Cyclooctadiene, wie beispielsweise μ-Dichlorobis(cyclooctadiene)-diiridium(I), verwendet.

Diese Aufzählung ist nur illustrierend und nicht beschränkend. Die Entwicklung der Hydrosilylierungskatalysatoren ist ein dynamisches Forschungsgebiet, das immer wieder neue wirksame Spezies hervorbringt, die naturgemäß ebenfalls hier eingesetzt werden können.

Vorzugsweise handelt es sich bei dem Hydrosilylierungskatalysator um Verbindungen oder Komplexe des Platins, bevorzugt um Platinchloride und Platinkomplexe, insbesondere um Platin-Olefin-Komplexe und besonders bevorzugt um Platin-Divinyltetramethyldisiloxankomplexe.

Bei dem erfindungsgemäßen Verfahren wird der Hydrosilylierungskatalysator in Mengen von 2 bis 250 Gewichtsppm eingesetzt, vorzugsweise in Mengen von 3 bis 150 ppm, insbesondere in Mengen von 3 bis 50 ppm.

In einer bevorzugten Ausführungsform werden die Polyorganosiloxane der Formel (I) in einem dritten Schritt mit einem Metallsubstrat verbunden.

Die Polyorganosiloxane der Formel (I) eignen sich besonders gut zum Einsatz als Bindemittel und / oder als Haftvermittler für die Herstellung metallplattierter Schichtstoffe, insbesondere für elektronische Anwendungen, insbesondere für metallkaschierte Schichtstoffe und insbesondere für die Verwendung in Hochfrequenzanwendungen, ganz besonders solchen, die bei Frequenzen von 1 GHz und darüber betrieben werden. Besonders bevorzugt ist die Herstellung von metallkaschierten Elektrolaminaten, wie man sie zur Herstellung als Leiterplatten in elektronischen Geräten verwendet, insbesondere für Hochfrequenzanwendungen.

Besagte metallkaschierte Elektrolaminate können Verstärkungsmaterialien enthalten, müssen aber nicht. Das heißt, sie können beispielsweise verstärkende Gewebe wie Fasergewebe oder Vliese enthalten oder sie können frei von solchen sein. Falls ein verstärkendes Material enthalten ist, ist dies vorzugsweise in Schichten angeordnet. Eine verstärkende Schicht kann dabei aus einer Vielzahl verschiedener Fasern aufgebaut sein.

Solche verstärkenden Schichten helfen das Schrumpfverhalten zu kontrollieren und geben erhöhte mechanische Festigkeit.

Sofern eine verstärkende Schicht mitverwendet wird, können die diese Schicht bildenden Fasern ausgewählt werden aus einer Vielzahl verschiedener Möglichkeiten. Nicht beschränkende Beispiele für solche Fasern sind Glasfasern, wie beispielsweise E-Glasfasern, S-Glasfasern und D-Glasfasern, Silicafasern, Polymerfasern, wie beispielsweise Polyetherimidfasern, Polysulfonfasern, Polyetherketonfasern, Polyesterfasern, Polycarbonatfasern, aromatische Polyamidfasern oder flüssigkristalline Fasern. Die Fasern können einen Durchmesser von 10 nm bis 10 μm aufweisen. Die Verstärkungsschicht hat eine Stärke von höchstens 200 μm, vorzugsweise höchstens 150 μm.

Eine bevorzugte Anwendungsform ist die Verwendung der Polyorganosiloxane der Formel (I) als Bindemittel oder Cobindemittel zusammen mit organischen Bindemitteln zur Herstellung von metallkaschierten Laminaten aus Glasfasercompositen zur weiteren Herstellung von Leiterplatten. Das bevorzugte Metall ist Kupfer.

Für die erfindungsgemäße Verwendung der Polyorganosiloxane der Formel (I) können diese als alleiniges Bindemittel verwendet werden. Sie können auch abgemischt mit organischen Monomeren, Oligomeren und Polymeren

verwendet werden.

Typischerweise hierfür verwendete organische Monomere, Oligomere und Polymere umfassen Polyphenylenether, Bismaleimide, Bismaleimid Triazin Copolymere, Kohlenwasserstoffharze, sowohl aliphatische wie beispielsweise Polybutadien, als auch aromatische wie beispielsweise Polystyrol, als auch Hybridsysteme, die sowohl aliphatischen als auch aromatischen Charakter haben, wie beispielsweise Styrolpolyolefin Copolymere, wobei die Form der Copolymeren grundsätzlich wiederum nicht eingeschränkt ist, Epoxidharze, Cyanatesterharze und gegebenenfalls andere, wobei die Auswahl illustrierend zu verstehen ist und nicht einschränkend.

Bevorzugte organische Monomere, Oligomere und Polymere sind oligomere und polymere Polyphenylenether, monomere, oligomere und polymere Bismaleimide, oligomere und polymere Kohlenwasserstoffharze sowie Bismaleimid Triazin Copolymere. Dabei können die organischen Monomere, Oligomere und Polymere gegebenenfalls miteinander gemischt eingesetzt werden.

Der Anteil der organischen Monomere, Oligomere und Polymere in den Zubereitungen mit den Polyorganosiloxanen der Formel (I), sofern die organischen Komponenten mitverwendet werden, beträgt zwischen 10 und 90% bezogen auf die Mischung aus den Polyorganosiloxanen der Formel (I) und den organischen Monomeren, Oligomeren und Polymeren 100%, bevorzugt 20 - 90%, insbesondere 30 - 80%.

Darüber hinaus können sowohl die Polyorganosiloxane der Formel (I) als auch die Mischungen derselben mit organischen Monomeren, Oligomeren oder Polymeren in weiteren organischen Monomeren gegebenenfalls mit olefinisch oder acetylenisch ungesättigten Gruppen als Reaktivverdünner gelöst werden, wie beispielsweise Styrol, alpha Methylstyrol, para-Methylstyrol und Vinylstyrol, Chlor- und Bromstyrol.

Ebenso können typische nicht reaktive Lösemittel zur Lösung der Polyorganosiloxane der Formel (I) und gegebenenfalls Gemische derselben mit organischen Monomeren, Oligomeren und Polymeren eingesetzt werden, wie beispielsweise aliphatische oder aromatische Lösemittel wie aliphatische Gemische mit bestimmten Siedebereichen, Toluol, Xylol, Ethylbenzol oder Gemische derselben Aromaten, Ketone, wie Aceton, Methylethylketon, Cyclohexanon, Carbonsäureester, wie Ethylacetat, Methylacetat, Ethylformiat, Methylformiat, Propionsäuremethylester, Propionsäureethylester, wobei eine gute Löslichkeit insbesondere der Gemische aus Polyorganosiloxane der Formel (I) mit organischen Monomeren, Oligomeren und Polymeren am ehesten in aromatischen Lösemitteln wie Toluol, Xylol, Ethylbenzol und Gemischen derselben erreicht wird.

In dem Falle, dass die Polyorganosiloxane der Formel (I) in Kombination mit einem organischen Oligomer oder Polymer oder Gemischen derselben eingesetzt werden, ist es wesentlich, dass Polyorganosiloxane der Formel (I) verwendet werden, die mit den organischen Komponenten der Wahl verträglich sind und nicht zu Phasenseparationen führen. In diesen Fällen sind in der Regel phenylreichere Polyorganosiloxane der Formel (I) einzusetzen, da Phenylgruppen die Verträglichkeit mit den organischen Komponenten erhöhen. Insbesondere mit aromatenreicheren organischen Polymeren wie Polyphenylenethern oder aromatischen Kohlenwasserstoffharzen sind aromatenreichere Polyorganosiloxane der Formel (I) zu verwenden, wobei zur Verträglichkeitseinstellung sowohl die verbrückenden aromatischen Gruppen als auch terminal an Silyleinheiten gebundene aromatische Substituenten beitragen. Die genaue Menge der aromatischen Gruppen, die notwendig ist, um die Verträglichkeit der Polyorganosiloxane der Formel (I) mit einer bestimmten Auswahl an organischen Bindemitteln einzustellen, muss in Abhängigkeit der Auswahl an organischen Bindemitteln ermittelt werden.

Ebenso wie es möglich ist, mehrere organische Polymere zu mischen, die gegebenenfalls aus verschiedenen Polymerklassen ausgewählt werden und in der Bindemittelzubereitung zu verwenden sind. Es ist auch möglich mehrere Polyorganosiloxane der Formel (I) miteinander in Bindemittelzubereitung zu kombinieren. D.h. es ist erfindungsgemäß sowohl nur ein einziges Polyorganosiloxan der Formel (I) als Bindemittel zu verwenden, als auch mehrere Polyorganosiloxane der Formel (I) miteinander zu einer Bindemittelzubereitung zu kombinieren. Ebenso ist es erfindungsgemäß nur ein Polyorganosiloxan der Formel (I) mit einem oder mehreren organischen Polymeren zu einer Bindemittelzubereitung zu kombinieren. Es ist auch erfindungsgemäß mehrere Polyorganosiloxane der Formel (I) mit einem oder mehreren verschiedenen organischen Polymeren zu einer Bindemittelzubereitung zu kombinieren.

Die Feststellung der Verträglichkeit eines oder mehrerer Polyorganosiloxane der Formel (I) mit einem oder mehreren organischen Oligomeren oder Polymeren gelingt leicht, indem man eine Mischung des oder der organischen Bindemittel mit dem oder den Polyorganosiloxanen der Formel (I) vorteilhafter Weise in einem Lösemittel, das alle ausgewählten Komponenten löst, mischt, anschließend das Lösemittel nach Methoden gemäß Stand der Technik, beispielsweise durch Destillation oder Sprühtrocknen entfernt und den erhaltenen Rückstand optisch oder unter Zuhilfenahme mikroskopischer gegebenenfalls elektronenmikroskopischer Methoden bewertet. Verträgliche Mischungen erkennt man daran, dass sich keine Silicondomänen von den organischen Bestandteilen abtrennen und als eigene Phase erkennbar sind.

Die Verwendung weiterer Formulierungskomponenten, wie Additiven, die gegebenenfalls auch Silane umfassen können, wie beispielsweise Antischaum- und Entlüftungsmitteln, Netz- und Dispergiermitteln, Verlaufsmitteln, Kompatibilisatoren, Haftvermittlern, Härtungsinitiatoren, Katalysatoren, Stabilisatoren, Füllstoffen einschließlich Pigmenten, Farbstoffen, Inhibitoren, Flammschutzmittel und Vernetzungshilfsmitteln ist erfindungsgemäß und die Auswahl

solcher Komponenten grundsätzlich nicht eingeschränkt. Außer Prüfungen der Verträglichkeit im Sinne eines geeigneten Mischbarkeitsverhaltens sind gegebenenfalls auch Prüfungen der Verträglichkeit hinsichtlich der Reaktivität erforderlich, um sowohl ein vorzeitiges Gelieren zu verhindern als auch sicherzustellen, dass während der Härtung eine ausreichend schnelle Polymerisation bzw. Copolymerisation aller Komponenten miteinander erreicht wird, ebenso wie Prüfungen auf ausreichende Benetzung und gegebenenfalls weiterer Eigenschaften. Dies ist im Rahmen der Formulierungserstellung gegebenenfalls zu beachten und zu berücksichtigen.

Beispiele für verwendbare Füllstoffe sind keramische Füllstoffe wie etwa Kieselsäuren, beispielsweise Fällungskieselsäuren oder pyrogene Kieselsäuren, die sowohl hydrophil als auch hydrophob sein können und vorzugsweise hydrophob sind und die des Weiteren auch mit organischen Gruppen auf ihrer Oberfläche funktionell und gegebenenfalls reaktiv ausgestattet sein können, Quarz, der gegebenenfalls oberflächenbehandelt oder oberflächenfunktionalisiert sein kann, so dass er reaktive funktionelle Gruppen auf der Oberfläche tragen kann, Aluminiumoxide, Aluminiumhydroxide, Calciumcarbonat, Talk, Glimmer, Ton, Kaolin, Magnesiumsulfat, Ruß, Titandioxid, Zinkoxide, Antimontrioxid, Bariumtitanat, Strontiumtitanat, Korund, Wollastonit, Zirkoniumwolframat, keramische Hohlkugeln, Aluminiumnitrid, Siliziumcarbid, Berylliumoxid, Magnesiumoxid, Magnesiumhydroxid, volle Glaskugeln, hohle Glaskugeln und Bornitrid. Als weitere Füllstoffe können Kern-Hülle-Partikel aus verschiedenen Materialien eingesetzt werden, wie etwa oberflächlich kieselsäurebelegte Siliconharzkugeln und polymerbelegte Elastomerpartikel, wobei die Elastomerpartikel gegebenenfalls auch Siliconelastomere sein können und ein typisches Beispiel für eine Oberflächenbelegung eines solchen Elastomerpartikels eine Polymethylmethacrylathülle ist. Die keramischen Füllstoffe haben vorzugsweise Partikelgrößen ausgedrückt als $D_{90}$ Wert von 0,1 $\mu$m bis 10 $\mu$m. Füllstoffe sind vorzugsweise vorhanden in Mengen von 0,1 bis 60 Gewichtsprozent, bevorzugt von 0,5 bis 60 Gewichtsprozent, insbesondere von 1 bis 60 Gewichtsprozent bezogen auf die gesamte Bindemittelformulierung bestehend aus Bindemittel bzw. Bindemitteln, reaktiven Monomeren, Additiven, und Füllstoffen als 100%. D.h. die Menge eines evtl. eingesetzten nicht reaktiven Lösemittels, wird nicht mitgezählt.

Bei den Füllstoffen sind solche besonders hervorzuheben, die thermisch leitfähig sind. Diese sind Aluminiumnitrid, Bornitrid, Siliziumcarbid, Diamant, Graphit, Berylliumoxid, Zinkoxid, Zirkoniumsilikat, Magnesiumoxid, Siliziumoxid und Aluminiumoxid.

Grundsätzlich können die Bindemittelzubereitungen flammhemmende Additive enthalten in einer Menge von üblicherweise 5 bis 25 Gewichtsprozent. Es ist allerdings eine Besonderheit der Polyorganosiloxane der Formel (I), dass sie den Bedarf an flammhemmenden Additiven reduzieren, da die Polyorganosiloxane der Formel (I) selbst bereits flammhemmende Eigenschaften zeigen. Polysilsesquioxane und Siloxane sind bekannt dafür flammhemmende Eigenschaften zu zeigen und es gehört zum Stand der Technik, dass sie selbst als flammhemmende Additive eingesetzt werden. Es ist daher ein besonderer Vorteil der vorliegenden Erfindung, dass es hier gelingt die Funktion des Bindemittels mit der Funktion der Flammhemmung zu verknüpfen. In Abhängigkeit von der eingesetzten Menge an Polyorganosiloxanen der Formel (I) kann daher die Menge an flammhemmenden Additiven reduziert werden. Bei einer Menge von mindestens 20 Gewichtsprozent bezogen auf die gesamte Mischung aller verwendeten Bindemittel und reaktiven organischen Monomere beträgt die Menge an flammhemmenden Additiven vorzugsweise nur noch 0 bis 10 Gewichtsprozent, besonders bevorzugt 0 bis 8 Gewichtsprozent, insbesondere 0 bis 5 Gewichtsprozent, d.h. es ist möglich bei Einsatz der Polyorganosiloxane der Formel (I) je nach Auswahl des Organopolysiloxans und der eingesetzten Menge auf den Einsatz eines flammhemmenden Additives zu verzichten.

Typische Beispiele für flammhemmende Additive sind Hydrate der Metalle Al, Mg, Ca, Fe, Zn, Ba, Cu oder Ni und Borate des Ba und Zn. Die flammhemmenden Additive können oberflächenbehandelt sein, wobei sie gegebenenfalls reaktive Gruppen auf der Oberfläche besitzen können. Es kann sich bei den flammhemmenden Additiven auch um halogenierte organische flammhemmende Additive handeln, wie beispielsweise Hexachloroendomethylentetrahydrphthalsäure, Tetrabromphthalsäure oder Dibromneopentylglykol. Beispiele für weitere flammhemmende Additive sind Melamincyanurat, Phosphor haltige Komponenten, wie Phosphinate, Diphosphinate, Phopsphazene, Vinylphosphazene, Phosphonate, Phosphaphenantreneoxide, feinkörnige Melaminpolyphosphate. Weitere Beispiele für bromhaltige flammhemmende Additive sind Bispentabromphenylethan, Ethylenbistetrabromphthalimid, Tetradecabromdiphenoxybenzol, Decabromdiphenyloxid oder bromierte Polysilsesquioxane. Einige flammhemmende Additive verstärken sich in ihrer Wirkung synergistisch. Das ist beispielsweise der Fall für die Kombination von halogenierten Flammschutzadditiven mit Antimontrioxid.

Weitere Beispiele für sonstige Komponenten sind Antioxidationsmittel, Stabilisatoren gegen Abbau durch Bewitterung, Gleitmittel, Weichmacher, farbgebende Mittel, phosphoreszierende oder andere Mittel zum Zwecke der Markierung und Nachverfolgbarkeit und Antistatikmittel.

Vorzugsweise werden die Polyorganosiloxane der Formel (I) in einem vierten Schritt vernetzt.

Als Vernetzungshilfsmittel kommen insbesondere mehrfach ungesättigte radikalisch härtbare oder hydrosilylierbare Monomere und Oligomere zur Anwendung wie sie in nachfolgenden nicht beschränkenden Beispielen illustriert sind. Dazu gehören beispielsweise zweifach olefinisch ungesättigte Komponenten wie beispielsweise symmetrisch olefinisch ungesättigte disubstituierte Disiloxane, wie 1,1,3,3-Tetramethyl-1,3-divinyldisiloxan, 1,1,3,3-Tetramethyl-1,3-dipropylmethacryloyldisiloxan, zweifach olefinisch ungesättigte disubstituierte beispielsweise diallyl-, divinyl-, diacryloyl-

oder dimethacryloylsubstiuierte organische Monomere oder Oligomere wie beispielsweise konjugierte und nicht konjugierte Diene, wie 1,9-Decadien, 1,3-Butadien. Ebenso gehören hierzu dreifach olefinisch ungesättigte Monomere oder Oligomere wie 1,2,4-Trivinylcyclohexan, Triallylcyanurate oder Triallylisocyanurate, Tri(meth)acrylate, wie beispielsweise Trimethylolpropantrimethacrylat.

Ebenso gehören hierzu vierfach ungesättigte substituierte Monomere und Oligomere wie beispielsweise 2,4,6,8-*Tetramethyl-2,4,6,8-tetravinylcyclotetrasiloxan, 2,4,6,8-Tetraphenyl-2,4,6,8-tetravinylcyclotetrasiloxane,* 2,2-Bis[[(2-methyl-1-oxoallyl)oxy]methyl]-1,3-propandiylbismethacrylat (*Pentaerythritoltetramethacrylat), Tetraallylorthosilikat,* Tetraallyl-cia,cis,cis,cis-1,2,3,4-cyclopentantetracarboxylat, Tetraallylsilane, Glyoxalbis(diallylacetal).

Da neben der radikalischen Härtung auch die Hydrosilylierungshärtung denkbar ist, können auch mehrfach Si-H-funktionelle Komponenten als Vernetzer wirken, wie beispielsweise 1,1,3,3-Tetramethyl-1,*3-disiloxan, 2,4,6,8*-Tetramethyl-cyclotetrasiloxan, 1,4-Bis(dimethylsilyl)benzol oder mehrfach ketten- und / oder endständig Si-H-funktionelle Oligo- und Polyorganosiloxane.

Als Katalysatoren bzw. Initiatoren kommen für die radikalische Härtung der Bindemittelzubereitungen aus Polyorganosiloxanen der Formel (I) und organischen Monomeren, Oligomeren und Polymeren die gleichen in Frage wie sie bereits weiter oben genannt sind, also insbesondere Peroxide. Darüber hinaus sind zur Initiierung der radikalischen Härtung sowohl der Polyorganosiloxane der Formel (I) alleine als auch der beschriebenen Bindemittelzubereitungen weitere Radikalstarter geeignet, wie beispielsweise Azokomponenten, wie beispielsweise $\alpha,\alpha$'Azobis(isobutyronitril), Redoxinitiatoren wie zum Beispiel Kombinationen aus Peroxiden wie Wasserstoffperoxid und Eisensalzen oder Azide wie Acetylazid.

Die Polyorganosiloxane der Formel (I) bzw. die Zubereitungen diese enthaltend, können für die erfindungsgemäße Anwendung sowohl lösemittelfrei als auch als lösemittelhaltige Zubereitung eingesetzt werden. In der Regel werden sie als lösemittelhaltige Zubereitung eingesetzt, um die homogene Verteilung aller Komponenten der Formulierung ineinander und die Benetzung und Durchtränkung einer evtl. verwendeten Verstärkungsschicht zu erleichtern. In der Regel wird eine Verstärkungsschicht mit eingesetzt. Bevorzugt handelt es sich dabei um ein Glasfasergewebe. Die Durchtränkung der Verstärkungsschicht kann durch imprägnierenden Auftrag der Zubereitung erfolgen, wobei hierfür verschiedene technische Lösungen zur Verfügung stehen, gegebenenfalls auch kontinuierliche Verfahren, und deren Auswahl zur Herstellung der erfindungsgemäßen metallkaschierten Laminate in keiner Weise eingeschränkt ist. Nicht limitierende Beispiele für Auftragstechniken sind das Tauchen, gegebenenfalls von Bahnen des Verstärkungsmaterials über Rollensysteme in kontinuierlichen Prozessen, das Sprühen, Fluten, Rakeln, etc.

Es ist ein Vorteil der vorliegenden Erfindung, dass alle zur Verfügung stehenden Technologien ohne Einschränkung und Modifizierung angewendet werden können und kein spezielles neues Verfahren für den Einsatz der Polyorganosiloxane der Formel (I) erforderlich ist. Insofern bewegt sich die vorliegende Erfindung in der Herstellung der metallkaschierten Laminate vollumfänglich im verfügbaren Stand der Technik. Neu ist die Verwendung der Polyorganosiloxane der Formel (I) für die Herstellung der betreffenden metallkaschierten Laminate, die bislang unbekannt ist.

Nach dem Imprägnieren folgt ein Trockenschritt, bei dem gegebenenfalls verwendetes Lösemittel entfernt wird. Auch für den Trocknungsprozess finden Methoden nach Stand der Technik Anwendung. Diese umfassen insbesondere das thermisch induzierte Verdampfen mit oder ohne Vakuum. Durch geeignete Einstellung der Reaktivität und der Klebrigkeit der verwendeten Bindemittelmischung werden nach diesem Schritt unter geeigneten Bedingungen, wie beispielsweise Kühlung, lagerfähige Composite Materialien erhalten, die gegebenenfalls zu einem späteren Zeitpunkt weiterverarbeitet werden können. In einem letzten Schritt des Verfahrens erfolgt die Polymerisation der Bindemittelzubereitung wiederum nach Methoden gemäß Stand der Technik. Gegebenenfalls mitverwendete Initiatoren für die radikalische Polymerisation werden dabei über ihre Zersetzungstemperatur hinaus erhitzt, so dass sie unter Bildung von Radikalen zerfallen und die radikalische Polymerisation der Bindemittelzubereitung initiieren. Grundsätzlich sind auch Methoden der Strahlenhärtung anwendbar.

Wird statt der radikalischen Polymerisation die Hydrosilylierungshärtung verwendet, ist in diesem Schritt eine Temperatur anzuwenden, die geeignet ist, den zum verwendeten Hydrosilylierungskatalysator mit verwendeten Inhibitor zu deaktivieren und die katalytische Aktivität des Hydrosilylierungskatalysators freizusetzen.

Dieser Schritt erfolgt in der Regel bei erhöhter Temperatur von vorzugsweise 100 bis 390°C, besonders bevorzugt von 100 bis 250°C, insbesondere von 130 bis 200°C, wobei die Temperatur für eine Zeit von vorzugsweise 5 bis 180 min wirksam ist, besonders bevorzugt 5 bis 150 min, insbesondere 10 bis 120 min. Außerdem ist es üblich bei diesem Schritt erhöhten Druck anzuwenden. Übliche Drücke liegen im Bereich von 1 bis 10 MPa, besonders bevorzugt von 1 bis 5 MPa, insbesondere von 1 bis 3 MPa.

Die Laminierung des Composite Materials mit einer leitfähigen Metallschicht erfolgt in diesem zweiten Schritt, indem eine Schicht mindestens eines ausgewählten Metalls auf einer oder auf beiden Seiten des Composite Materials aus Verstärkungsschicht und Bindemittelzubereitung aufgebracht wird, bevor die Härtung stattfindet. D.h. zwischen dem ersten Schritt bestehend aus Imprägnierung und Trocknung und dem zweiten Schritt umfassend die chemische Härtung der Bindemittelzubereitung, erfolgt das Kaschieren des Composites aus dem ersten Schritt mit mindestens einer Sorte eines leitfähigen Metalls.

Als leitfähige Metalle kommen insbesondere mindestens eines aus folgender Auswahl in Frage: Kupfer, Edelstahl, Gold, Aluminium, Silber, Zink, Zinn, Blei und Übergangsmetalle. Die Dicke der leitfähigen Schicht, ihre Form, Größe oder Oberflächentextur sind nicht grundsätzlich eingeschränkt. Die leitfähige Metallschicht hat vorzugsweise eine Dicke von 3 bis 300 μm, besonders bevorzugt von 3 bis 250 μm, insbesondere von 3 bis 200 μm. Dabei kann die Dicke der beiden Schichten mindestens einer Sorte eines leitfähigen Metalls, sofern zwei Schichten verwendet werden, variieren und muss nicht identisch sein. Besonders bevorzugt ist es, dass das leitfähige Metall Kupfer ist und dass in dem Fall, dass zwei leitfähige Schichten aus leitfähigem Metall verwendet werden, beide Schichten Kupfer sind. Das leitfähige Metall wird vorzugsweise in Form einer Folie aus dem betreffenden Metall verwendet. Der Mittenrauwert Ra der eingesetzten Metallfolie beträgt vorzugsweise höchstens 2 μm, besonders bevorzugt höchstens 1 μm, insbesondere höchstens 0,7 μm. Je geringer die Oberflächenrauigkeit ist, desto besser ist die Eignung der jeweiligen Folie für den Einsatz in Hochfrequenzanwendungen, die das bevorzugte Ziel der vorliegenden Erfindung sind. Zur Verbesserung der Haftung zwischen der leitfähigen Metallschicht und dem Composite aus Bindemittelzubereitung und Verstärkungsschicht, können gegebenenfalls verschiedene Methoden gemäß Stand der Technik eingesetzt werden, wie beispielsweise die Verwendung einer haftvermittelnden Schicht, die galvanotechnische Abscheidung der Metallschicht auf dem Composite aus Bindemittelzubereitung und Verstärkungsschicht oder die Gasphasenabscheidung. Die Schicht aus leitfähigem Metall kann direkt auf dem Composite aus Bindemittelzubereitung und Verstärkungsschicht sitzen oder durch eine haftvermittelnde Schicht mit derselben verbunden sein.

Falls keine Verstärkungsschicht mitverwendet wird, erfolgt die Erzeugung einer Schicht aus der Bindemittelzubereitung enthaltend die Polyorganosiloxane der Formel (I) durch Abscheidung einer Schicht aus Bindemittelzubereitung auf einem Träger, wie beispielsweise einer Trennfolie oder Trennplatte, wobei für den Träger grundsätzlich jedes Material geeignet ist, von dem die getrocknete oder gehärtete Bindemittelzubereitung später wieder ablösbar ist, wie beispielsweise Polytetrafluorethylen, Polyester und dergleichen. Die Ablösbarkeit sowie die Filmbildungseigenschaften auf dem jeweiligen Trägermaterial sind in Abhängigkeit von der Bindemittelzusammensetzung individuell zu bestimmen. Die getätigten Aussagen zum Verfahren bleiben für diese verstärkungsfreie Variante in gleicher Weise gültig.

Aus den verstärkten oder unverstärkten Composite Materialien aus dem ersten und den laminierten Composite Materialien aus dem zweiten Schritt lassen sich mehrschichtige Aufbauten erzeugen, indem mehrere Lagen der Composite Materialien aus dem ersten Schritt beispielsweise abwechselnd mit den kaschierten Laminaten aus dem zweiten Schritt übereinander gestapelt werden und die noch nicht gehärteten Composite Materialien aus dem ersten Schritt anschließend in einem Prozess, der im Wesentlichen der Vorgehensweise zur Erzeugung der metallkaschierten Laminate entspricht, gehärtet wird. Zur Erzeugung dickerer Schichten können hierbei auch mehrere Lagen aus den verstärkten oder unverstärkten Compositen aus dem ersten Schritt in unmittelbarer Reihenfolge übereinandergestapelt werden.

Die Polyorganosiloxane der Formel (I) können außer für die Herstellung metallkaschierter Laminate des Weiteren in korrosionsschützenden Zubereitungen verwendet werden, insbesondere zur Verwendung zum Zwecke des Korrosionsschutzes bei hoher Temperatur.

Außerdem können die Polyorganosiloxane der Formel (I) und Zubereitungen, die diese enthalten auch zum Korrosionsschutz von Armierungsstahl in Stahlbeton eingesetzt werden. Korrosionsinhibierende Effekte im Stahlbeton werden dabei sowohl dann erreicht, wenn man die Polyorganosiloxane der Formel (I) und Zubereitungen, die diese enthalten in die Betonmischung einbringt, bevor sie in Form gebracht und ausgehärtet werden, als auch wenn man die Polyorganosiloxane der Formel (I) oder Zubereitungen, die diese enthalten auf die Oberfläche des Betons aufbringt, nachdem der Beton ausgehärtet ist.

Außer zum Zwecke des Korrosionsschutzes auf Metallen können die Polyorganosiloxane der Formel (I) auch zur Manipulation von weiteren Eigenschaften von Zubereitungen, die die erfindungsgemäßen Organopolysiloxane enthalten oder von Festkörpern oder Filmen, die aus Zubereitungen erhalten werden, die die Polyorganosiloxane der Formel (I) enthalten, dienen wie z.B.:

- Steuerung der elektrischen Leitfähigkeit und des elektrischen Widerstandes
- Steuerung der Verlaufseigenschaften einer Zubereitung
- Steuerung des Glanzes eines feuchten oder gehärteten Filmes oder eines Objektes
- Erhöhung der Bewitterungsbeständigkeit
- Erhöhung der Chemikalienresistenz
- Erhöhung der Farbtonstabilität
- Reduzierung der Kreidungsneigung
- Reduzierung oder Erhöhung der Haft- und Gleitreibung auf Festkörpern oder Filmen erhalten aus Zubereitungen, die Polyorganosiloxane der Formel (I) enthaltend
- Stabilisierung oder Destabilisierung von Schaum in der Zubereitung, die die Polyorganosiloxane der Formel (I) enthält
- Verbesserung der Haftung der Zubereitung die die Polyorganosiloxane der Formel (I) enthält zu Substraten

- Steuerung des Füllstoff- und Pigmentnetz- und - Dispergierverhaltens,
- Steuerung der rheologischen Eigenschaften der Zubereitung, die die erfindungsgemäßen Organopolysiloxane enthält,
- Steuerung der mechanischen Eigenschaften, wie z.B. Flexibilität, Kratzfestigkeit, Elastizität, Dehnbarkeit, Biegefähigkeit, Reißverhalten, Rückprallverhalten, Härte, Dichte, Weiterreißfestigkeit, Druckverformungsrest, Verhalten bei verschiedenen Temperaturen, Ausdehnungskoeffizient, Abriebfestigkeit sowie weiterer Gasdurchlässigkeit, Beständigkeit gegen Wasserdampf, Heißluft, Chemikalien, Bewitterung und Strahlung, der Sterilisierbarkeit, von Festkörpern oder Filmen erhältlich, die die Polyorganosiloxane der Formel (I) oder diese enthaltende Zubereitungen enthält
- Steuerung der elektrischen Eigenschaften, wie z.B. dielektrischer Verlustfaktor, Durchschlagfestigkeit, Dielektrizitätskonstante, Kriechstromfestigkeit, Lichtbogenbeständigkeit, Oberflächenwiderstand, spezifischer Durchschlagswiderstand,
- Flexibilität, Kratzfestigkeit, Elastizität, Dehnbarkeit, Biegefähigkeit, Reißverhalten, Rückprallverhalten, Härte, Dichte, Weiterreißfestigkeit, Druckverformungsrest, Verhalten bei verschiedenen Temperaturen von Festkörpern oder Filmen erhältlich aus der Zubereitung die die Polyorganosiloxane der Formel (I) enthält.

Beispiele für Anwendungen, in denen die Polyorganosiloxane der Formel (I) eingesetzt werden können, um die oben bezeichneten Eigenschaften zu manipulieren, sind die Herstellung von Beschichtungsstoffen und Imprägnierungen und daraus zu erhaltenden Beschichtungen und Überzügen auf Substraten, wie Metall, Glas, Holz, mineralisches Substrat, Kunst- und Naturfasern zur Herstellung von Textilien, Teppichen, Bodenbelägen, oder sonstigen aus Fasern herstellbaren Gütern, Leder, Kunststoffe wie Folien, und Formteilen. Die Polyorganosiloxane der Formel (I) können in Zubereitungen bei entsprechender Auswahl der Zubereitungskomponenten außerdem als Additiv zum Zwecke der Entschäumung, der Verlaufsförderung, Hydrophobierung, Hydrophilierung, Füllstoff- und Pigmentdispergierung, Füllstoff- und Pigmentbenetzung, Substratbenetzung, Förderung der Oberflächenglätte, Reduzierung des Haft- und Gleitwiderstandes auf der Oberfläche der aus der additivierten Zubereitung erhältlichen ausgehärteten Masse eingesetzt werden. Die Polyorganosiloxane der Formel (I) können in flüssiger oder in ausgehärteter fester Form in Elastomermassen eingearbeitet werden. Hierbei können sie zum Zwecke der Verstärkung oder zur Verbesserung anderer Gebrauchseigenschaften, wie der Steuerung der Transparenz, der Hitzebeständigkeit, der Vergilbungsneigung, oder der Bewitterungsbeständigkeit, eingesetzt werden.

Alle vorstehenden Symbole der vorstehenden Formeln weisen ihre Bedeutungen jeweils unabhängig voneinander auf. In allen Formeln ist das Siliziumatom vierwertig.

**Beispiele:**

Alle Prozentangaben beziehen sich auf das Gewicht. Falls nicht anders angegeben, werden alle Manipulationen bei Raumtemperatur von 23°C und unter Normaldruck (1,013 bar) ausgeführt.

Falls nicht anders angegeben, gelten alle Daten zur Beschreibung von Produkteigenschaften bei Raumtemperatur von 23°C und unter Normaldruck (1,013 bar).

Bei den Apparaten handelt es sich um handelsübliche Laborgeräte, wie sie von zahlreichen Geräteherstellern käuflich angeboten werden.

Ph bedeutet einen Phenylrest = $C_6H_5$-Me bedeutet einen Methylrest = $CH_3$-. $Me_2$ bedeutet entsprechend zwei Methylreste.

PPE bedeutet Polyphenylenether.

HCl bedeutet Chlorwasserstoff.

Im vorliegenden Text werden Stoffe durch Angabe von Daten charakterisiert, die mittels instrumenteller Analytik erhalten werden. Die zugrundeliegenden Messungen werden entweder öffentlich zugänglichen Normen folgend durchgeführt oder nach speziell entwickelten Verfahren ermittelt. Um die Klarheit der mitgeteilten Lehre zu gewährleisten, sind die verwendeten Methoden hier nachfolgend angegeben.

In allen Beispielen beziehen sich die Angaben von Teilen und Prozentsätzen auf das Gewicht, falls nicht anders angegeben.

**Viskosität:**

Die Viskositäten werden, wenn nicht anders angegeben, durch rotationsviskosimetrische Messung gemäß DIN EN ISO 3219 bestimmt. Falls nicht anders angegeben, gelten alle Viskositätsangaben bei 25°C und Normaldruck von 1013 mbar.

**Brechungsindex:**

Die Brechungsindices werden im Wellenlängenbereich des sichtbaren Lichtes bestimmt, falls nicht anders angegeben, bei 589 nm bei 25°C und Normaldruck von 1013 mbar gemäß der Norm DIN 51423.

**Transmission:**

Die Transmission wird durch UV VIS Spektroskopie bestimmt. Ein geeignetes Gerät ist beispielsweise das Analytik Jena Specord 200.

Die verwendeten Messparameter sind: Bereich: 190 - 1100 nm Schrittweite: 0,2 nm, Integrationszeit: 0,04 s, Messmodus: Schrittbetrieb. Als erstes erfolgt die Referenzmessung (Background). Eine Quarzplatte, befestigt an einem Probenhalter (Dimension der Quarzplatten: HxB ca. 6 x 7 cm, Dicke ca. 2,3 mm), wird in den Probenstrahlengang gegeben und gegen Luft gemessen.

Danach erfolgt die Probenmessung. Eine am Probenhalter befestigte Quarzplatte mit aufgetragener Probe - Schichtdicke aufgetragene Probe ca. 1 mm - wird in den Probenstrahlengang gegeben und gegen Luft gemessen. Die interne Verrechnung gegen das Backgroundspektrum liefert das Transmissionsspektrum der Probe.

**Molekülzusammensetzungen:**

Die Molekülzusammensetzungen werden mittels Kernresonanzspektroskopie bestimmt (zu Begrifflichkeiten siehe ASTM E 386: Hochauflösende magnetische Kernresonanzspektroskopie (NMR): Begriffe und Symbole), wobei der $^{1}$H-Kern und der $^{29}$Si-Kern vermessen werden.

**Beschreibung $^{1}$H-NMR Messung:**

| | |
|---|---|
| Solvent: | CDCl3, 99,8%d |
| Probenkonzentration: | ca. 50 mg / 1 ml CDCl3 in 5 mm NMR-Röhrchen |

Messung ohne Zugabe von TMS, Spektrenreferenzierung von Rest-CHCl3 in CDCl3 auf 7,24 ppm

| | |
|---|---|
| Spektrometer: | Bruker Avance I 500 oder Bruker Avance HD 500 |
| Probenkopf: | 5 mm BBO-Probenkopf oder SMART-Probenkopf (Fa. Bruker) |

Meßparameter:

$$\text{Pulprog} = \text{zg30}$$

$$\text{TD} = 64\text{k}$$

NS = 64 bzw. 128 (abhängig von der Empfindlichkeit des Probenkopfes)

$$\text{SW} = 20{,}6\ \text{ppm}$$

$$\text{AQ} = 3{,}17\ \text{s}$$

$$\text{D1} = 5\ \text{s}$$

$$\text{SFO1} = 500{,}13\ \text{MHz}$$

O1 = 6,175 ppm

Processing-Parameter:

SI = 32k

WDW = EM

LB = 0,3 Hz

Je nach verwendetem Spektrometertyp sind evtl. individuelle Anpassungen der Messparameter erforderlich.

**Beschreibung $^{29}$Si-NMR Messung:**

| | |
|---|---|
| Solvent: | C6D6 99,8%d/CCl4 1:1 v/v mit 1Gew% $Cr(acac)_3$ als Relaxationsreagenz |
| Probenkonzentration: | ca. 2 g / 1,5 ml Solvent in 10 mm NMR-Röhrchen |
| Spektrometer: | Bruker Avance 300 |
| Probenkopf: | 10 mm 1H/13C/15N/29Si glasfreier QNP-Probenkopf (Fa. Bruker) |

Messparameter:

Pulprog = zgig60
TD = 64k
NS = 1024 (abhängig von der Empfindlichkeit des Probenkopfes)
SW = 200 ppm
AQ = 2,75 s
D1 = 4 s
SFO1 = 300,13 MHz
O1 = -50 ppm

Processing-Parameter:

SI = 64k
WDW = EM
LB = 0,3 Hz

Je nach verwendetem Spektrometertyp sind evtl. individuelle Anpassungen der Messparameter erforderlich.

**Molekulargewichtsverteilungen:**

Molekulargewichtsverteilungen werden als Gewichtsmittel Mw und als Zahlenmittel Mn bestimmt, wobei die Methode der Gelpermeationschromatographie (GPC bzw. Size Exclusion Chromatographie (SEC)) Anwendung findet mit Polystyrol Standard und Brechungsindexdetektor (RI-Detektor). Wo nicht anders ausgewiesen, wird THF als Eluent verwendet und DIN 55672-1 angewendet. Die Polydispersität ist der Quotient Mw/Mn.

**Glasübergangstemperaturen:**

Die Glasübergangstemperatur wird nach Dynamischer Differenzkalorimetrie (Differential Scanning Calorimetry, DSC) nach DIN 53765, gelochter Tigel, Aufheizrate 10 K/min bestimmt.

**Bestimmung der Teilchengröße:**

Die Partikelgrößen wurden nach der Methode der Dynamic Light Scattering (DLS) unter Bestimmung des Zetapotenzials gemessen. Für die Bestimmung wurden folgende Hilfsmittel und Reagenzien verwendet: Polystyrolküvetten 10 x 10 x 45 mm, Pasteurpipetten für den Einmalgebrauch, ultrareines Wasser.

Die zu vermessende Probe wird homogenisiert und blasenfrei in die Messküvette eingefüllt.

Die Messung erfolgt bei 25°C nach einer Äquilibrierzeit von 300s mit hoher Auflösung und automatischer Messzeiteinstellung.

Die angegebenen Werte beziehen sich immer auf den Wert D(50). D(50) ist als volumengemittelter Partikeldurchmesser zu verstehen, bei dem 50% aller gemessenen Partikel einen volumengemittelten Durchmesser kleiner als der ausgewiesene Wert D(50) aufweisen.

**Bestimmung der dielektrischen Eigenschaften:** Df, Dk

Die Bestimmung der dielektrischen Eigenschaften erfolgt gemäß IPC TM 650 2.5.5.13 mit einem Network Analyzer Keysight/Agilent E8361A nach der Split-Cylinder Resonator Methode bei 10 GHz.

**Durchführung der Mikroskopie:**

Die Mikro-/Nanostruktur wurde lichtmikroskopisch bzw. mittels Transmissionselektronenmikroskopie charakterisiert.

Lichtmikroskopie:

Probenpräparation: 1 Tropfen Probe (unverdünnt) auf Objektträger; mit Deckglas abgedeckt

Gerät: LEICA DMRXA2 mit CCD-Kamera LEICA DFC420 (2592x1944 Pixel)
Abbildung: Durchlicht - Interferenzkontrast, verschiedene Vergrößerungsstufen

Transmissionselektronenmikroskopie:

Probenpräparation: 1 Tropfen Probe (Verdünnung 1:20, bei Bedarf Anpassung notwendig) auf beschichtetes TEM-Grid; Zugabe eines Kontrastmittels bei Bedarf; Trocknung bei RT
Gerät: ZEISS LIBRA 120 mit CCD-Kamera Sharp Eye (1024x1024 Pixel)
Abbildung: Anregungsspannung 120 kV; TEM-Hellfeld; verschiedene Vergrößerungsstufen

**Haftungsprüfung durch Abzugstest (Peel strength Test):**

Die Haftung der auf die Composite Schichten mit oder ohne Verstärkungsmaterial aufkaschierten Metallschichten wurde bestimmt gemäß der Methode IPC-TM 650 2.4.8 "Peel Strength of Metalic Clad Laminates" in der Version "as received", d.h. ohne thermische Belastung oder Exposition.

Eine 35 $\mu$m Kupferfolie, Masse 285 $\pm$ 10 g/m$^2$, Rautiefe Rz $\leq$ 8 $\mu$m, Mittenrauwert Ra $\leq$ 0,4 $\mu$m wurde beiderseits auf einer Compositeschicht von 100 $\mu$m Dicke aufkaschiert, wobei zum Härten und Laminieren 180 min lang 200°C, 2,0 MPa, 30 mm Hg Säule wirkten.

**Synthesebeispiel 1:** Herstellung eines Organopolysiloxans nach dem erfindungsgemäßen Verfahren:

Ein Gemisch aus 1267,8 g (6 mol) Phenyltrichlorsilan, 372,6 g (1,5 mol) 3-(Trimethoxysilyl)propylmethacrylat und 780 g Xylol wird innerhalb von 4 Stunden zu einer Vorlage aus 3600 g Wasser dosiert. Die Reaktion des Chlorsilans in Wasser ist exotherm und erzeugt Salzsäure, die sich im vorgelegten Wasser löst. Man achtet darauf, dass die Temperatur aufgrund der exothermen Temperaturerhöhung 50°C nicht überschreitet und reduziert gegebenenfalls die Dosiergeschwindigkeit, um diese Temperaturgrenze nicht zu überschreiten.

Nach beendeter Dosierung lässt man 15 Minuten nachrühren und stellt anschließend den Rührer ab. Das

Reaktionsgemisch trennt sich in eine salzsaure wässrige Phase, die im Reaktionsgefäß unten sitzt und in eine organische Siliconphase, die oben sitzt. Die wässrige Phase wird abgelassen.

Zur verbleibenden organischen Phase gibt man einen Liter Wasser, rührt 30 Minuten lang und stellt den Rührer danach wieder ab. Die wässrige Phase trennt sich wiederum nach unten ab und wird abgelassen. Dieser Vorgang wird wiederholt, bis der Rest HCl-Gehalt in der organischen Phase bestimmt durch Säure-Base Titration gemäß Stand der Technik < 20 ppm beträgt.

Sollte sich die wässrige Phase nach oben absetzen, wird statt mit vollentsalztem Wasser mit einer 10% Natriumchlorid haltigen wässrigen Lösung gewaschen, bzw. 100 g Natriumchlorid zugegeben, erneut für 30 min gerührt und danach die Phasentrennung erneut durchgeführt.

Danach wird aus der organischen Phase bei Umgebungsdruck am Wasserabscheider solange destilliert, bis sich kein Wasser mehr abscheidet, die organische Phase also technisch wasserfrei ist.

Der Rest Wassergehalt der organischen Zubereitung wird durch Karl Fischer Titration bestimmt und beträgt 856 ppm.

Durch **$^1$H-NMR** wird der Gehalt an Silanolgruppen ausgedrückt als OH-Gruppen mit einem Molekulargewicht von 17 g/mol zu 1,6 Gewichtsprozent bestimmt. Das bedeutet bei einem Molekulargewicht der Zwischenstufe aus dem ersten Reaktionsschritt von Mw = 3347 g/mol einen Silanolgehalt von 3,2 mol OH.

Man lässt das Reaktionsgemisch auf 40°C abkühlen und dosiert zuerst 318 g (3,2 mol) Dimethyldichlorsilan und anschließend 261 g (3,3 mol) Pyridin zu. Die erste Dosierung dauert 30 Minuten, die zweite 45 Minuten. Man beobachtet einen exothermen Temperaturanstieg. Auch hier wird die Temperatur durch Anpassung der Dosiergeschwindigkeit auf 50°C begrenzt. Nach vollendeter Dosierung wird 60 Minuten nachgerührt, um die Reaktion zu vervollständigen.

Nach beendeter Reaktion wird dreimal mit jeweils einem Liter vollentsalztem Wasser gewaschen und die wässrige Phase jeweils wie zuvor beschrieben abgetrennt.

Nach der letzten Phasentrennung beträgt der Rest HCl-Gehalt in der organischen Phase < 20 ppm. Man reduziert des Lösemittelanteil durch Destillation, wobei man einen Festgehalt von 80% Harz einstellt, d.h. die finale Harzlösung besteht aus 20% Xylol und 80% Polyorganosiloxan.

Methoxygruppen sind im NMR nicht nachweisbar. Der Rest Silanolgehalt beträgt 0,05 Gewichtsprozent bestimmt durch $^1$H-NMR Spektroskopie.

SEC: Mw = 4914 g/mol, Mn = 1904 g/mol, Polydispersität PD = 2,58.

Nach **$^{29}$Si-NMR** ist die molare Zusammensetzung des siliziumhaltigen Anteils der Zubereitung:

$Me_2Si(H)O_{1/2}$: 30,96 %
$H_2C{=}C(CH_3)C({=}O){-}O{-}(CH_2)_3{-}SiO_{3/2}$: 13,89%
$PhSiO_{3/2}$: 55,15 %

Dieses Produkt wird im Folgenden als 1.1 bezeichnet.

**Synthesebeispiel 2:** Herstellung eines silphenylenverbrückten Organopolysiloxans nach dem erfindungsgemäßen Verfahren und Vergleich zu einer nicht erfindungsgemäßen in beiden Schritten hydrolytischen Vorgehensweise.

**Synthese der Silphenylenvorstufe:**

1,4-Bis(dimethoxyphenylsilyl)benzol gemäß Literaturvorschrift nach Xunjun Chen, Minghao Yi, Shufang Wu, Lewen Tan, Yixin Xu, Zhixing Guan, Jianfang Ge and Guoqiang Yin: Synthesis of Silphenylene-Containing SiloxaneResins Exhibiting Strong Hydrophobicity and High Water Vapor Barriers, Coatings 2019, 9, 481; doi:10.3390/coatings9080481 www.mdpi.com/journal/coatings

1,4-Bis(dimethoxyphenylsilyl)benzol wird erhalten, indem gemäß angegebener Literaturvorschrift gemäß "2.2. Synthesis of the 1,4-Bis(Dimethoxyphenylsilyl)Benzene (BDMPD)" Trimethoxyphenylsilan mit einem Grignard Reagenz erhalten aus 1,4-Dibrombenzol umgesetzt wird. Die Struktur wurde durch $^1$H-NMR-Spektroskopie und Vergleich mit der angegebenen Literatur bestätigt.

Die Vorgehensweise zur Harzsynthese entspricht der in Synthesebeispiel 1 beschriebenen mit folgenden Unterschieden:
Man verwendet eine Mischung aus

845,2 g (= 4 mol) Phenyltrichlorsilan,
546,7 g (1,3 mol) 1,4-Bis(dimethoxyphenylsilyl)benzol,
198,7 g (0,8 mol) 3-(Trimethoxysilyl)propylmethacrylat 820 g Xylol
und eine Vorlage aus 2400 g vollentsalztem Wasser

Die Dosierzeit beträgt 4 Stunden.

Das erhaltene Zwischenprodukt nach der ersten Stufe besitzt ein Molekulargewicht von Mw = 1247 und enthält 3 Gewichtsprozent Silanolgruppen, bestimmt durch **$^{1}$H-NMR** als OH mit einem Molekulargewicht von 17 g/mol, also 2,2 mol OH.

An dieser Stelle würde die Synthese nach US 2018022053 gemäß der dort als illustrierend angegebenen Beispiele und gemäß dem Text der Beschreibung von US 2018022053 bereits enden.

Um den Silanolgehalt zu reduzieren wird die gleiche Vorgehensweise angewandt wie in Synthesebeispiel 1 beschrieben, wobei im Unterschied zu Synthesebeispiel 1 in diesem Fall

265,1 g (2,2 mol) Vinyldimethylchlorsilan und
174 g (2,2 mol) Pyridin verwendet werden.

In dem erhaltenen Produkt sind per **$^{1}$H-NMR** keine Methoxygruppen mehr nachweisbar. D.h. das methacrylatfunktionelle Trimethoxysilan ist vollständig einkondensiert, das resultierende Methanol wurde bei der Aufarbeitung entfernt. Der Anteil an Silanolgruppen konnte durch die Nachbehandlung auf ca. 0,05 Gewichtsprozent (Bestimmung per $^{1}$H-NMR) reduziert werden.

Per SEC (Eluent Toluol) wurden folgende Molekulargewichte bestimmt: Mw = 2347 g/mol, Mn = 1503 g/mol, Polydispersität PD = 1,56.

Nach **$^{29}$Si-NMR** ist die molare Zusammensetzung des siliziumhaltigen Anteils der Zubereitung:

$Me_2Si(Vi)O_{1/2}$: 26,54 %
$H_2C{=}C(CH_3)C({=}O)\text{-}O\text{-}(CH_2)_3\text{-}SiO_{3/2}$: 9,98%
$O_{2/2}(Ph)Si\text{-}C_6H_4\text{-}Si(Ph)O_{2/2}$: 15,23%
$PhSiO_{3/2}$: 48,25 %

Dieses Produkt wird im Folgenden als 2.1 bezeichnet.

Alternativ zur erfindungsgemäßen nicht hydrolytischen Vorgehensweise wird folgende hydrolytische Vorgehensweise zur Reduzierung der Silanolgruppen ausgeführt, die in US 2018022053 nicht erwähnt wird, jedoch grundsätzlich in dessen erfindungsgemäßen Umfang fallen könnte, da die Anzahl der Stufen des hydrolytischen Prozesses dort nicht eingeschränkt ist.

Man dosiert zur wasserfreien Vorlage aus dem ersten Reaktionsschritt 200 g Wasser zu der zuvor ausdestillierten xylolischen Reaktionsmischung. Danach werden 265,1 g (2,2 mol) Vinyldimethylchlorsilan langsam zudosiert, wobei man die Dosiergeschwindigkeit so anpasst, dass die Reaktionstemperatur (Innentemperatur im Reaktionsgefäß) auf unter 50°C begrenzt bleibt. Nach beendeter Dosierung wird 60 min nachgerührt, wobei weder geheizt noch gekühlt wird, um die Reaktion der Silanolgruppen mit dem Vinyldimethylchlorsilan bzw. dem Tetramethyldivinyldisiloxan, das sich daraus gebildet hat, vollständig abzuschließen.

Die Wasserphase wird wie oben beschrieben abgetrennt und danach dreimal jeweils mit einem Liter Wasser wie bereits oben beschrieben gewaschen. Gegebenenfalls kann die Phasentrennung verbessert werden, indem man bei abgeschaltetem Rührer auf 60°C Heizmanteltemperatur aufheizt. Nach den Waschungen beträgt der HCl-Gehalt in der xylolischen Lösung weniger als 20 ppm.

Man reduziert die Menge Toluol durch Destillation im Vakuum (20 mbar) bei 110°C soweit, dass eine Lösung aus 80% Harz in 20% Xylol erhalten wird.

In dem erhaltenen Produkt sind per **$^{1}$H-NMR** keine Methoxygruppen mehr nachweisbar. D.h. das methacrylatfunktionelle Trimethoxysilan ist auch hier vollständig einkondensiert, das resultierende Methanol wurde bei der Aufarbeitung entfernt. Der Anteil an Silanolgruppen konnte durch die Nachbehandlung jedoch nur auf 0,9 Gewichtsprozent (Bestimmung per $^{1}$H-NMR) reduziert werden.

Per SEC (Eluent Toluol) wurden folgende Molekulargewichte bestimmt: Mw = 7347 g/mol, Mn = 2903 g/mol, Polydispersität PD = 2,53.

Hier zeigt sich ein weiterer Unterschied zum erfindungsgemäßen Verfahren. Das zur Reduzierung der Silanolgruppen eingesetzte Vinyldimethylsilan bildet teilweise das symmetrische Disiloxan, das bei der Aufarbeitung destillativ entfernt wird und durch die bei der Reaktion des Chlorsilans mit Wasser gebildete HCl katalysiert die Reaktion der Silanolgruppen, was zwar zu einer Reduzierung derselben führt, allerdings durch eine Kondensation zu deutlich höherem Molekulargewicht und damit einer deutlichen Erhöhung des Risikos, dass das aus dem ersten Schritt erhaltene Polyorganosiloxan zu einem unlöslichen Produkt durchpolymerisiert und dadurch unbrauchbar wird. Dieser Effekt wird durch die erfindungsgemäße Vorgehensweise effizient vermieden.

Nach **$^{29}$Si-NMR** ist die molare Zusammensetzung des siliziumhaltigen Anteils der Zubereitung:

$Me_2Si(Vi)O_{1/2}$: 11,54 %
$H_2C{=}C(CH_3)C({=}O)\text{-}O\text{-}(CH_2)_3\text{-}SiO_{3/2}$: 11,98%

$O_{2/2}(Ph)Si-C_6H_4-Si(Ph)O_{2/2}$: 19,23%
$PhSiO_{3/2}$: 57,25 %

Die Silanolgruppen finden sich an den $PhSiO_{3/2}$-Einheiten gebunden.

Dieses Produkt wird im Folgenden als 2.2 bezeichnet.

Auch in den NMR Daten ist bei hydrolytischer Vorgehensweise die nur unvollständige Reaktion des eingesetzten Chlorsilans erkennbar, denn der Anteil an $Me_2Si(Vi)O_{1/2}$ Einheiten müsste bei vollständiger Reaktion in das Polyorganosiloxan aus der ersten Stufe deutlich höher sein. Damit ist klar gezeigt, dass die wasserfreie Vorgehensweise der wässrigen Vorgehensweise für eine kontrollierte Reduzierung der polaren Silanolgruppen in einem robust steuer- und beherrschbaren Prozess überlegen ist.

**Synthesebeispiel 3:** Herstellung eines Organopolysiloxans mit Alkylenbrücke nach dem erfindungsgemäßen Verfahren und Vergleich zu einer nicht erfindungsgemäßen wässrigen Vorgehensweise.

Die Synthese gemäß Synthesebeispiel 1 wird wiederholt, wobei im Unterschied zu Synthesebeispiel 1 folgende Einsatzmengen verwendet werden:

Phenyltrichlorsilan: 422,6 g (= 2 mol)
1,2-Bis(dichlormethylsilyl)ethan: 341,35 g (1,35 mol)
198,7 g (0,8 mol) 3-(Trimethoxysilyl)propylmethacrylat 820 g Xylol
und eine Vorlage aus 2400 g vollentsalztem Wasser

Die Dosierzeit beträgt 4 Stunden.

Das erhaltene Zwischenprodukt nach der ersten Stufe besitzt ein Molekulargewicht von Mw = 2247 und enthält 2,5 Gewichtsprozent Silanolgruppen, bestimmt durch **$^1$H-NMR** als OH mit einem Molekulargewicht von 17 g/mol, also 3,3 mol OH.

An dieser Stelle würde die Synthese nach US 2018022053 gemäß der dort als illustrierend angegebenen Beispiele und gemäß dem Text der Beschreibung von US 2018022053 bereits enden.

Um den Silanolgehalt zu reduzieren wird die gleiche Vorgehensweise angewandt wie in Synthesebeispiel 1 beschrieben, wobei im Unterschied zu Synthesebeispiel 1 in diesem Fall

397,7 g (3,3 mol) Vinyldimethylchlorsilan und
261 g (3,3 mol) Pyridin verwendet werden.

Methoxygruppen sind im NMR nicht nachweisbar. Der Anteil an Silanolgruppen konnte durch die Nachbehandlung auf ca. 0,05 Gewichtsprozent (Bestimmung per $^1$H-NMR) reduziert werden.

Per SEC (Eluent Toluol) wurden folgende Molekulargewichte bestimmt: Mw = 2954 g/mol, Mn = 1919 g/mol, Polydispersität PD = 1,53.

Nach **$^{29}$Si-NMR** ist die molare Zusammensetzung des siliziumhaltigen Anteils der Zubereitung:

$Me_2Si(Vi)O_{1/2}$: 44,29 %
$H_2C=C(CH_3)C(=O)-O-(CH_2)_3-SiO_{3/2}$: 10,78%
$O_{2/2}(Me)Si-C_2H_4-Si(Me)O_{2/2}$: 18,12%
$PhSiO_{3/2}$: 26,81 %

Dieses Produkt wird im Folgenden als 3.1 bezeichnet.

Alternativ zur erfindungsgemäßen nicht hydrolytischen Vorgehensweise wird folgende hydrolytische Vorgehensweise zur Reduzierung der Silanolgruppen ausgeführt, die in US 2018022053 nicht erwähnt wird, jedoch grundsätzlich in dessen erfindungsgemäßen Umfang fallen könnte, da die Anzahl der Stufen des hydrolytischen Prozesses dort nicht eingeschränkt ist.

Analog der Vorgehensweise in Synthesebeispiel 2 werden zur wasserfreien Vorlage aus dem ersten Reaktionsschritt 300 g Wasser zugegeben.

Danach werden 397,7 g (3,3 mol) Vinyldimethylchlorsilan langsam zudosiert und weiter verfahren wie in Synthesebeispiel 2 beschrieben.

In dem erhaltenen Produkt sind per **$^1$H-NMR** keine Methoxygruppen mehr nachweisbar. Der Anteil an Silanolgruppen konnte durch die Nachbehandlung jedoch nur auf 1,0 Gewichtsprozent (Bestimmung per $^1$H-NMR) reduziert werden.

SEC: Mw = 6974 g/mol, Mn = 2812 g/mol, Polydispersität PD = 2,48.

Nach $^{29}$Si-NMR ist die molare Zusammensetzung des siliziumhaltigen Anteils der Zubereitung:

$Me_2Si(Vi)O_{1/2}$: 21,69 %
$H_2C=C(CH_3)C(=O)-O-(CH_2)_3-SiO_{3/2}$: 15,09%
$O_{2/2}(Me)Si-C_2H_4-Si(Me)\ O_{2/2}$: 25, 47%
$PhSiO_{3/2}$: 37,75 %

Die Silanolgruppen finden sich an den $PhSiO_{3/2}$-Einheiten gebunden.

Dieses Produkt wird im Folgenden als 3.2 bezeichnet.

Auch hier wird im hydrolytischen Prozess ein höheres Molekulargewicht und eine unvollständigere Reduzierung der Silanolgruppen erzielt als im erfindungsgemäßen nicht hydrolytischen Prozess.

**Synthesebeispiel 4:** Herstellung eines Organopolysiloxans mit Si-Si-Bindung nach dem erfindungsgemäßen Verfahren im Vergleich zu einer nicht erfindungsgemäßen wässrigen Vorgehensweise.

Die Synthese gemäß Synthesebeispiel 1 wird wiederholt, wobei im Unterschied zu Synthesebeispiel 1 folgende Einsatzstoffe und Einsatzmengen verwendet werden:

Phenyltrichlorsilan: 422,6 g (= 2 mol)
198,7 g (0,8 mol) 3-(Trimethoxysilyl)propylmethacrylat
296,4 g (1,3 mol) 1,1,2,2-Tetrachlor-1,2-dimethyldisilan
820 g Xylol
und eine Vorlage aus 2400 g vollentsalztem Wasser

Die Dosierzeit beträgt 4 Stunden.

Das erhaltene Zwischenprodukt nach der ersten Stufe besitzt ein Molekulargewicht von Mw = 1867 g/mol und enthält 2,9 Gewichtsprozent Silanolgruppen, bestimmt durch $^1H$-NMR als OH mit einem Molekulargewicht von 17 g/mol, also 3,2 mol OH.

An dieser Stelle würde die Synthese nach US 2018022053 gemäß der dort als illustrierend angegebenen Beispiele und gemäß dem Text der Beschreibung von US 2018022053 bereits enden.

Um den Silanolgehalt zu reduzieren wird die gleiche Vorgehensweise angewandt wie in Synthesebeispiel 1 beschrieben, wobei im Unterschied zu Synthesebeispiel 1 in diesem Fall

385,6 g (3,2 mol) Vinyldimethylchlorsilan und
261 g (3,3 mol) Pyridin verwendet werden.

Methoxygruppen sind im NMR nicht nachweisbar. Der Anteil an Silanolgruppen konnte durch die Nachbehandlung auf ca. 0,05 Gewichtsprozent (Bestimmung per $^1H$-NMR) reduziert werden.

Per SEC (Eluent Toluol) wurden folgende Molekulargewichte bestimmt: Mw = 2479 g/mol, Mn = 1678 g/mol, Polydispersität PD = 1,47.

Nach $^{29}Si$-NMR ist die molare Zusammensetzung des siliziumhaltigen Anteils der Zubereitung:

$Me_2Si(Vi)O_{1/2}$: 40,34 %
$H_2C=C(CH_3)C(=O)-O-(CH_2)_3-SiO_{3/2}$: 10,96%
$O_{2/2}(Me)Si-Si(Me)O_{2/2}$: 21,31%
$PhSiO_{3/2}$: 27,39 %

Dieses Produkt wird im Folgenden als 4.1 bezeichnet.

Alternativ zur erfindungsgemäßen nicht hydrolytischen Vorgehensweise wird folgende hydrolytische Vorgehensweise zur Reduzierung der Silanolgruppen ausgeführt, die in US 2018022053 nicht erwähnt wird, jedoch grundsätzlich in dessen erfindungsgemäßen Umfang fallen könnte, da die Anzahl der Stufen des hydrolytischen Prozesses dort nicht eingeschränkt ist.

Analog der Vorgehensweise in Synthesebeispiel 2 werden zur wasserfreien Vorlage aus dem ersten Reaktionsschritt 300 g Wasser zugegeben.

Danach werden 385,6 g (3,2 mol) Vinyldimethylchlorsilan langsam zudosiert und weiter verfahren wie in Synthesebeispiel 2 beschrieben.

In dem erhaltenen Produkt sind per $^1H$-NMR keine Methoxygruppen mehr nachweisbar. Der Anteil an Silanolgruppen konnte durch die Nachbehandlung jedoch nur auf 1,1 Gewichtsprozent (Bestimmung per $^1H$-NMR) reduziert werden.

SEC: Mw = 4974 g/mol, Mn = 2006 g/mol, Polydispersität PD = 2,48.

Nach $^{29}Si$-NMR ist die molare Zusammensetzung des siliziumhaltigen Anteils der Zubereitung:

$Me_2Si(Vi)O_{1/2}$: 18,96 %
$H_2C=C(CH_3)C(=O)-O-(CH_2)_3-SiO_{3/2}$: 15,13%
$O_{2/2}(Me)Si-Si(Me)O_{2/2}$: 28, 08%
$PhSiO_{3/2}$: 37,83 %

Die Silanolgruppen finden sich an den $PhSiO_{3/2}$-Einheiten gebunden.

Dieses Produkt wird im Folgenden als 4.2 bezeichnet.

Auch hier wird im hydrolytischen Prozess ein höheres Molekulargewicht und eine unvollständigere Reduzierung der Silanolgruppen erzielt als im erfindungsgemäßen nicht hydrolytischen Prozess.

**Anwendungsbeispiel 1: Verwendung der erfindungsgemäß und nicht erfindungsgemäß hergestellten Organopolysiloxane gemäß Synthesebeispiele 1 - 4 zur Herstellung metallkaschierter Laminate.**

Die gemäß den Synthesebeispielen 1 bis 4 und gemäß den darin enthaltenen Vergleichsbeispielen hergestellten Organopolysiloxane wurden als Bindemittel verwendet, um kupferkaschierte Laminate mit einer glasfaserverstärkten Composite Schicht herzustellen. Folgende Einsatzstoffe wurden verwendet:
Kupferfolie: 35 $\mu$m dicke Kupferfolie (285 $\pm$ 10 g/m$^2$) der Firma Jiangtong-yates Copper Foil Co Ltd, mit einer Rautiefe von Rz $\leq$ 8 $\mu$m und einer Mittenrautiefe von Ra $\leq$ 0,4 $\mu$m, Reinheit $\geq$ 99,8%.

Glasfaser: E-Glasfaser Type 1080 E hergestellt von Changzhou Xingao Insulation Materials Co. Ltd. Dicke 0,055 $\pm$ 0,012 mm, 47,5 $\pm$ 2,5 g/m$^2$.

In diesem Beispiel wurden alle Organopolysiloxane als Lösung in Xylol verwendet. Die Lösungen enthielten jeweils 80% Organopolysiloxan und 20% Xylol.

Um die Härtung zu initiieren wurden die Organopolysiloxane mit jeweils 1 Gewichtsprozent Dicumylperoxid bezogen auf die Menge eingesetztes Polyorganosiloxan versetzt, das durch Rühren gleichmäßig in der Harzmatrix verteilt wurde.

Laminate wurden hergestellt, indem 30 x 30 cm große Glasfaserschichten lagenweise mit dem jeweiligen Organopolysiloxan gegebenenfalls als xylolische Lösung mithilfe einer Entlüfterrolle blasenfrei imprägniert wurden. Die Glasfaserschichten wurden dabei auf einer formstabilen ebenen Unterlage aus Edelstahl gelagert, auf die eine Lage Kupferfolie aufgebracht wurde, bevor die erste Lage Glasfaser aufgelegt wurde. Insgesamt wurden jeweils 3 Lagen Glasfasergewebe nacheinander imprägniert. Um das Lösemittel gegebenenfalls zu entfernen wurden die imprägnierten Gewebe bei 60°C in einem Vakuumtrockenschrank bei 10 mbar bis zur Gewichtskonstanz getrocknet. Danach wurde eine zweite Schicht Kupferfolie auf die imprägnierte Glaserfaserschicht oben aufgebracht und eine weitere formstabile Edelstahlplatte aufgelegt. Das Laminat wurde in einer heizbaren Presse bei 2 MPa Druck, 120 min bei 200°C und 30 mbar Unterdruck aufgeheizt. Man erhält kupferkaschierte Laminate mit einer Gesamtdicke von 260 $\pm$ 20 $\mu$m.

Die dielektrischen Eigenschaften wurden bestimmt gemäß IPC TM 650 2.5.5.13 mit einem Network Analyzer Keysight/Agilent E8361A nach der Split-Cylinder Resonator Methode bei 10 GHz. Folgende Werte wurden erhalten:

| Organopolysiloxan | $D_k$ | $D_f$ |
|---|---|---|
| 1.1 (erfindungsgemäß) | 2,78 | 0,0021 |
| 2.1 (erfindungsgemäß) | 2,89 | 0,0022 |
| 2.2 (nicht erfindungsgemäß) | 3,20 | 0,0040 |
| 3.1 (erfindungsgemäß) | 2,77 | 0,0023 |
| 3.2 (nicht erfindungsgemäß) | 3,34 | 0,0041 |
| 4.1 (erfindungsgemäß) | 2,79 | 0,0022 |
| 4.2 (nicht erfindungsgemäß) | 3,36 | 0,0041 |

Die $D_f$- und die $D_k$-Werte der kupferkaschierten Laminate aus den erfindungsgemäßen Organopolyiloxanen sind deutlich niedriger als die $D_f$-und $D_k$-Werte, die mit den Organopolysiloxanen aus der Vorgehensweise gemäß Stand der Technik erzielt werden. Da für Hochfrequenzanwendungen möglichst niedrige dielektrische Verlustfaktoren und Dielektrizitätszahlen angestrebt werden, ist der erfindungsgemäße Effekt deutlich zu erkennen.

**Anwendungsbeispiel 2: Verwendung der erfindungsgemäß und der nicht erfindungsgemäß hergestellten Organopolysiloxane gemäß Synthesebeispiele 1 - 4 zur Herstellung metallkaschierter Laminate über Prepregs.**

Für dieses Beispiel wurden die Organopolysiloxane aus den Synthesebeispielen 1 - 4 sowohl gemäß der erfindungsgemäßen als auch der nicht erfindungsgemäßen Vorgehensweise als Lösung in Xylol verwendet, wobei jeweils Zubereitungen aus 20% Xylol und 80% Polyorganosiloxan verwendet wurden.

Anstatt das Laminat ohne eine Prepreg Zwischenstufe direkt aufzubauen, wurden diesmal Prepregs hergestellt, indem die Glasfaserlagen als einzelne Lagen jeweils auf einer Polytetrafluorethylenfolie mit der Harzzubereitung imprägniert und anschließend im Vakuumtrockenschrank zur Gewichtskonstanz getrocknet wurden. Jeweils drei auf diese Weise hergestellte Lagen aus imprägniertem Glasfasergewebe wurden anschließend auf eine Kupferfolie übereinander abgelegt und der Stapel mit einer Lage Kupferfolie abgeschlossen. Dieser Mehrschichtaufbau wurde analog zu Anwendungsbeispiel 1 zwischen zwei formstabilen Edelstahlplatten in einer Vakuumpresse unter den Bedingungen wie in Beispiel 1 angegeben verpresst und ausgehärtet.

Die erhaltenen Laminate wiesen Dicken von 290 $\pm$ 20 $\mu$m auf.

An den erhaltenen Laminaten wurden folgende dielektrischen Eigenschaften gemessen:

| Organopolysiloxan | $D_k$ | $D_f$ |
|---|---|---|
| 1.1 (erfindungsgemäß) | 2,78 | 0,0020 |
| 2.1 (erfindungsgemäß) | 2,89 | 0,0020 |
| 2.2 (nicht erfindungsgemäß) | 3,20 | 0,0039 |
| 3.1 (erfindungsgemäß) | 2,77 | 0,0021 |
| 3.2 (nicht erfindungsgemäß) | 3,34 | 0,0040 |
| 4.1 (erfindungsgemäß) | 2,79 | 0,0020 |
| 4.2 (nicht erfindungsgemäß) | 3,36 | 0,0040 |

Die erzielten $D_k$ und $D_f$ Werte der kupferkaschierten Laminate aus den erfindungsgemäß hergestellten Organopolyiloxanen sind deutlich niedriger als die $D_f$ und $D_k$-Werte, die mit den Organopolysiloxanen aus den Vergleichsbeispielen erzielt werden. Da für Hochfrequenzanwendungen möglichst niedrige dielektrische Verlustfaktoren und Dielektrizitätszahlen angestrebt werden, ist der erfindungsgemäße Effekt deutlich zu erkennen.

**Anwendungsbeispiel 3 Verwendung der erfindungsgemäß und der nicht erfindungsgemäß hergestellten Organopolysiloxane gemäß Synthesebeispiele 1 - 4 zur Herstellung metallkaschierter Laminate im Gemisch mit organischen Polymeren**

Die Vorgehensweise entspricht im Wesentlichen der in Anwendungsbeispiel 2 beschriebenen, nur dass diesmal organische Polymere mit den Organopolysiloxanen gemischt wurden. Die finalen lösemittelfreien Mischungen enthielten stets 30 Gewichtsprozent Organopolysiloxan und 70 Gewichtsprozent organische Polymere. Als organische Polymere wurden Triallylisocyanurat, NORYL SA 9000, ein alpha omega methacrylatterminierter Polyphenylenether bezogen von der Firma SABIC, Mn = 2500 g/mol, Tg = 160°C und B 3000 der Firma Nippon Soda, ein flüssiges Polybutadien Mn = 3200, Viskosität bei 45°C = 210 Poise mit mehr als 85% 1,2-Vinylstruktur in der Polymerkette.

Die Polymere wurden stets im gleichen Mengenverhältnis verwendet. Sie wurden in Xylol gelöst bzw. dispergiert, wobei 30 Gewichtsteile SA 9000, 25 Gewichtsteile B 3000 und 15 Gewichtsteile Triallylisocyanurat mit 100 Gewichtsteilen Xylol dispergiert wurden.

Die so erhaltene Zubereitung wurde mit den xylolischen Lösungen der Organopolysiloxane gemäß Anwendungsbeispiel 2 so vermischt, dass jeweils das angegebene Mischungsverhältnis aus 30% Organopolysiloxan und 70% organische Komponenten in der erhaltenen Lösung vorlag. Diese Lösungen wurden dann verwendet, um wie in Anwendungsbeispiel 2 beschrieben, kupferkaschierte Laminate über Prepregs herzustellen.

Die erhaltenen Laminate wiesen Dicken von 290 $\pm$ 20 $\mu$m auf.

An den erhaltenen Laminaten wurden folgende dielektrischen Eigenschaften gemessen:

| mit dem Organopolysiloxan aus | $D_k$ | $D_f$ |
|---|---|---|
| 1.1 (erfindungsgemäß) | 2,91 | 0,0029 |
| 2.1 (erfindungsgemäß) | 2, 65 | 0,0022 |

(fortgesetzt)

| mit dem Organopolysiloxan aus | $D_k$ | $D_f$ |
|---|---|---|
| 2.2 (nicht erfindungsgemäß) | 3,28 | 0,0040 |
| 3.1 (erfindungsgemäß) | 2,78 | 0,0021 |
| 3.2 (nicht erfindungsgemäß) | 3,29 | 0,0041 |
| 4.1 (erfindungsgemäß) | 2,59 | 0,0022 |
| 4.2 (nicht erfindungsgemäß) | 3,21 | 0,0042 |

Die erzielten $D_k$ und $D_f$ Werte der kupferkaschierten Laminate unter Verwendung der erfindungsgemäß hergestellten Organopolyiloxane sind deutlich niedriger als die $D_f$ und $D_k$-Werte, die mit den Organopolysiloxanen aus den Vergleichsbeispielen erzielt wurden. Da für Hochfrequenzanwendungen möglichst niedrige dielektrische Verlustfaktoren und Dielektrizitätszahlen angestrebt werden, ist der erfindungsgemäße Effekt deutlich zu erkennen.

## Patentansprüche

**1.** Verfahren zur Herstellung von Polyorganosiloxanen der Formel (I)

$$[O_{3-a/2}R_aSiY(SiR_aO_{3-a/2})_b]_c(R^1SiO_{3/2})_d(R^2{}_2SiO_{2/2})_e(R^3{}_3SiO_{1/2})_f(SiO_{4/2})_g\ [O_{3-h/2}R^4{}_hSi(SiR^5{}_2):SiR^4{}_jO_{3-j/2}]_k \quad (I)$$

wobei die Reste R gleiche oder verschiedene Reste sein können und entweder einen Wasserstoffrest oder einen einwertigen Si-C gebundenen, unsubstituierten oder mit Heteroatomen substituierten organischen Kohlenwasserstoffrest mit 1 bis 18 C-Atomen bedeuten, der auch ein ungesättigter Kohlenwasserstoffrest sein kann,
Y eine chemische Bindung, ein Sauerstoffatom oder einen zwei- bis zwölfwertigen organischen unsubstituierten oder mit Heteroatomen substituierten organischen Rest mit 1 bis 24 C-Atomen bedeutet, der durch Si-C-Verknüpfung an die Siliziumatome gebunden vorliegt,
die Reste $R^1$, $R^2$ und $R^3$ unabhängig voneinander einen Wasserstoffrest oder einen gesättigten oder ungesättigten Si-C gebundenen C1 - C18 Kohlenwasserstoffrest, der unsubstituiert oder mit Heteroatomen substituiert sein kann oder einen über ein Sauerstoffatom gebundenen C1 - C12Kohlenwasserstoffrest, der Heteroatome enthalten kann, oder einen Silanolrest bedeuten, wobei die Reste $R^1$, $R^2$ und $R^3$ ihre Bedeutung jeweils unabhängig voneinander annehmen können, so dass mehrere Reste $R^1$, $R^2$ bzw. $R^3$, die am gleichen Siliziumatom gebunden vorliegen, verschiedene Reste aus der definierten Gruppe bedeuten können,
die Reste $R^4$ unabhängig voneinander entweder einen Wasserstoffrest, einen Silanolrest oder einen einwertigen Si-C oder Si-O-C-gebundenen, unsubstituierten oder mit Heteroatomen substituierten organischen Kohlenwasserstoffrest mit 1 bis 18 C-Atomen bedeuten, der auch ein ungesättigter Kohlenwasserstoffrest sein kann,
die Reste $R^5$ unabhängig voneinander entweder einen Wasserstoffrest, einen einwertigen Si-C gebundenen, unsubstituierten oder mit Heteroatomen substituierten organischen Kohlenwasserstoffrest mit 1 bis 18 C-Atomen, der auch ein ungesättigter Kohlenwasserstoffrest sein kann oder einen Rest der Formel (II) bedeuten

$$[O_{3-a/2}R_aSiY(SiR_aO_{3-a/2})_b]_c(R^1SiO_{3/2})_d(R^2{}_2SiO_{2/2})_e(R^3{}_3SiO_{1/2})_f(SiO_{4/2})_g \quad (II),$$

wobei bezogen auf alle Reste Y, R, $R^1$, $R^2$, $R^3$, $R^4$ und $R^5$ als 100 mol-% mindestens 0,1 mol-% olefinisch oder acetylenisch ungesättigte Reste sein müssen,
bezogen auf alle Reste Y, R, $R^1$, $R^2$, $R^3$, $R^4$ und $R^5$ als 100 Gewichts-% in Summe höchstens 3 Gew.-% Si-O-C-gebundene Reste und Silanolreste sind,
und bezogen auf alle Reste Y, R, $R^1$, $R^2$, $R^3$, $R^4$ und $R^5$ als 100 Gewichts-% in Summe höchstens 0,5 Gew.-% Silanolreste sind,
a 0, 1 oder 2 ist, wobei die Indices a zu beiden Seiten der Gruppe Y ihre Bedeutung unabhängig voneinander annehmen können, so dass verschiedene a unabhängig voneinander verschiedene Werte innerhalb des angegebenen Wertebereiches bedeuten können,
b eine Zahl im Wert von 1 bis 11, vorzugsweise 1 ist,
c einen Wert von 0 bis 0,9,
d einen Wert von 0 bis 0,8,

e einen Wert von 0 bis 0,5,
f einen Wert von 0,01 bis 0,6,
g einen Wert von 0 bis 0,6,
h und j unabhängig voneinander 0, 1 oder 2 sind,
i eine ganze Zahl im Wert von 0 bis 50 und
k einen Wert von 0 bis 0,9 bedeutet, wobei
c+d+e+f+g+k = 1, mindestens ein Wert c, d oder k > 0 und e+g ≤ 0,6 ist,
wobei die Reste R, $R^1$, $R^2$, $R^3$, $R^4$ und $R^5$ und die Indizes a, b, c, d, e, f, g, h und i in Formel (I) und in Formel (II) unabhängig voneinander die gleichen Bedeutungen haben und diese innerhalb der beschriebenen Wertebereiche unabhängig voneinander annehmen können,
bei dem in einem ersten Schritt Silane der Formel (III)

$$R^6{}_lSiR^7{}_{4-l} \qquad (III),$$

wobei $R^7$ eine hydrolysierbare Gruppe,
l eine ganze Zahl im Wert von 0, 1 oder 2 ist und
$R^6$ für l = 1 einen Rest $R^1$ und für l = 2 einen Rest $R^2$ bedeutet,
und / oder Di-, Oligo- oder Polysilane der Formel (IV)

$$R^7{}_{3-h}R^4{}_hSi(SiR^5{}_2)_iSiR^4{}_jR^7{}_{3-j} \qquad (IV),$$

wobei $R^7$ wie oben eine hydrolysierbare Gruppe bedeutet und $R^4$, $R^5$, h, i und j die gleichen Bedeutungen haben wie oben genannt,
und / oder organylverbrückte Silicone der Formel (V)

$$R^7{}_{3-a}R_aSiY(SiR_aR^7{}_{3-a})_b \qquad (V),$$

wobei $R^7$, R, Y, a und b die bereits genannte Bedeutung haben,
mit Wasser und falls nicht mindestens einer der hydrolysierbaren Reste $R^7$ ein Halogenrest ist, unter Verwendung katalytischer Mengen einer oder mehrere die Hydrolyse und Kondensation der Komponenten gemäß den Formeln (III), (IV) und (V) fördernde Säuren in Gegenwart eines nicht wassermischbaren, aprotischen Lösemittels umgesetzt werden,
wobei nach erfolgter Umsetzung sowohl die Wasser als auch die verbleibende Säuremenge in der organischen Phase auf weniger als jeweils 10000 ppm reduziert werden, und
in einem zweiten Schritt das im inerten organischen Lösemittel gelöste Reaktionsprodukt aus dem ersten Schritt ohne Wasser mit einem Halogensilan der Formel (VI)

$$R^3{}_3SiR^8 \qquad (VI),$$

wobei $R^3$ die gleichen Bedeutungen hat wie oben angegeben und $R^8$ ein Halogenatom bedeutet,
in Gegenwart einer Hilfsbase umgesetzt wird.

2. Verfahren nach Anspruch 1, bei dem die Reste R, $R^1$, $R^2$, $R^3$, $R^4$ und $R^5$ ausgewählt werden aus Methyl- Phenyl-, Vinyl-, Acryloyloxy- und Methacryloyloxyresten sowie den Acrylsäureestern oder Methacrylsäureestern von unverzweigten oder verzweigten Alkoholen mit 1 bis 15 C-Atomen.

3. Verfahren nach einem der vorangehenden Ansprüche, bei dem das aprotische Lösemittel ein aromatischer Kohlenwasserstoff ist.

4. Verfahren nach einem der vorangehenden Ansprüche, bei dem die Hilfsbase mindestens äquimolar bezüglich des Halogensilans eingesetzt wird.

5. Verfahren nach einem der vorangehenden Ansprüche, bei dem die Hilfsbase ausgewählt wird aus basischen Metallsalzen und Stickstoffverbindungen.

6. Verfahren nach einem der vorangehenden Ansprüche, bei dem in einem dritten Schritt die Polyorganosiloxane der Formel (I) mit einem Metallsubstrat verbunden werden.

7. Verfahren nach Anspruch 6, bei dem in einem vierten Schritt die Polyorganosiloxane der Formel (I) vernetzt werden.

8. Metallplattierte Schichtstoffe, herstellbar nach einem Verfahren gemäß Anspruch 6 oder 7, wobei im zweiten Schritt das Halogensilan der Formel (VI) so eingesetzt wird, dass eine zu den Silanolresten an der Polyorganosiloxanspezies aus dem ersten Reaktionsschritt äquimolare Menge Halogenidreste vorliegt.

## Claims

1. Process for preparing polyorganosiloxanes of the formula (I)

$$[O_{3-a/2}R_aSiY(SiR_aO_{3-a/2})_b]_c(R^1SiO_{3/2})_d(R^2{}_2SiO_{2/2})_e(R^3{}_3SiO_{1/2})_f(SiO_{4/2})_g \quad [O_{3-h/2}R^4{}_hSi(SiR^5{}_2)_iSiR^4{}_jO_{3-j/2}]_k \qquad (I)$$

where the radicals R may be identical or different radicals and are either a hydrogen radical or a monovalent, Si-C-bonded unsubstituted or heteroatom-substituted organic hydrocarbon radical having 1 to 18 carbon atoms, which may also be an unsaturated hydrocarbon radical,
Y is a chemical bond, an oxygen atom or a di- to dodecavalent organic unsubstituted or heteroatom-substituted organic radical having 1 to 24 carbon atoms and bonded to the silicon atoms by Si-C linkage,
the radicals $R^1$, $R^2$ and $R^3$ independently of one another are a hydrogen radical or a saturated or unsaturated, SiC-bonded C1 - C18 hydrocarbon radical, which may be unsubstituted or substituted by heteroatoms, or are a C1 - C12 hydrocarbon radical which is bonded via an oxygen atom and may contain heteroatoms, or are a silanol radical, where the radicals $R^1$, $R^2$ and $R^3$ may adopt their definition in each case independently of one another, and so two or more radicals $R^1$, $R^2$ and/or $R^3$ bonded on the same silicon atom may be different radicals from the group defined,
the radicals $R^4$ independently of one another are either a hydrogen radical, a silanol radical or a monovalent, Si-C- or Si-O-C-bonded, unsubstituted or heteroatom-substituted organic hydrocarbon radical having 1 to 18 carbon atoms, which may also be an unsaturated hydrocarbon radical,
the radicals $R^5$ independently of one another either are a hydrogen radical, a monovalent, Si-C-bonded, unsubstituted or heteroatom-substituted organic hydrocarbon radical having 1 to 18 carbon atoms, which may also be an unsaturated hydrocarbon radical, or are a radical of the formula (II)

$$[O_{3-a/2}R_aSi\text{-}Y(SiR_aO_{3^-a/2})_b]_c(R^1SiO_{3/2})_d(R^2{}_2SiO_{2/2})_e(R^3{}_3SiO_{1/2})_f(SiO_{4/2})_g \qquad (II)$$

where, based on all the radicals Y, R, $R^1$, $R^2$, $R^3$, $R^4$ and $R^5$ as 100 mol%, at least 0.1 mol% must be olefinically or acetylenically unsaturated radicals,
based on all the radicals Y, R, $R^1$, $R^2$, $R^3$, $R^4$ and $R^5$ as 100 weight%, in total at most 3 wt% are Si-O-C-bonded radicals and silanol radicals,
and, based on all the radicals Y, R, $R^1$, $R^2$, $R^3$, $R^4$ and $R^5$ as 100 weight%, in total at most 0.5 wt% are silanol radicals,
a is 0, 1 or 2, where the indices a on both sides of the group Y may adopt their definition independently of one another, and so different a independently of one another may have different values within the specified value range,
b is a number with a value of 1 to 11, preferably 1,
c has a value of 0 to 0.9,
d has a value of 0 to 0.8,
e has a value of 0 to 0.5,
f has a value of 0.01 to 0.6,
g has a value of 0 to 0.6,
h and j independently of one another are 0, 1 or 2,
i is an integer with a value of 0 to 50 and
k has a value of 0 to 0.9, where
c+d+e+f+g+k = 1, at least one value c, d or k is > 0 and e+g is ≤ 0.6,
where the radicals R, $R^1$, $R^2$, $R^3$, $R^4$ and $R^5$ and the indices a, b, c, d, e, f, g, h and i in formula (I) and in formula (II) independently of one another may have the same definitions and may adopt these definitions independently of one another within the value ranges described,

by reacting, in a first step, silanes of the formula (III)

$$R^6_lSiR^7_{4-l} \quad (III),$$

where $R^7$ is a hydrolysable group,
l is an integer with a value of 0, 1 or 2 and
$R^6$ if l = 1 is a radical $R^1$ and if l = 2 is a radical $R^2$, and/or di-, oligo- or polysilanes of the formula (IV)

$$R^7_{3-h}R^4_hSi(SiR^5_2)_iSiR^4_jR^7_{3-j} \quad (IV),$$

where $R^7$ as above is a hydrolysable group and $R^4$, $R^5$, h, i and j have the same definitions as stated above, and/or organyl-bridged silicones of the formula (V)

$$R^7_{3-a}R_aSiY(SiR_aR^7_{3-a})_b \quad (V),$$

where $R^7$, R, Y, a and b have the definition already stated,
with water and, if at least one of the hydrolysable radicals $R^7$ is not a halogen radical, using catalytic amounts of one or more acids which promote the hydrolysis and condensation of the components of formulae (III), (IV) and (V), in the presence of a non-water-miscible, aprotic solvent,
where, after reaction has taken place, both the water and the remaining amount of acid in the organic phase are reduced to less than 10 000 ppm each, and
in a second step reacting the reaction product from the first step, in solution in the inert organic solvent, without water, with a halosilane of the formula (VI)

$$R^3_3SiR^8 \quad (VI),$$

where $R^3$ has the same definitions as indicated above and $R^8$ is a halogen atom,
in the presence of an auxiliary base.

2. Process according to Claim 1, wherein the radicals R, $R^1$, $R^2$, $R^3$, $R^4$ and $R^5$ are selected from methyl, phenyl, vinyl, acryloyloxy and methacryloyloxy radicals and also the acrylic esters or methacrylic esters of unbranched or branched alcohols having 1 to 15 carbon atoms.

3. Process according to either of the preceding claims, wherein the aprotic solvent is an aromatic hydrocarbon.

4. Process according to any of the preceding claims, wherein the auxiliary base is used in at least equimolar amount relative to the halosilane.

5. Process according to any of the preceding claims, wherein the auxiliary base is selected from basic metal salts and nitrogen compounds.

6. Process according to any of the preceding claims, wherein the polyorganosiloxanes of the formula (I) in a third step are joined to a metal substrate.

7. Process according to Claim 6, wherein the polyorganosiloxanes of the formula (I) in a fourth step are crosslinked.

8. Metal-clad laminates producible by a process according to Claim 6 or 7, wherein in the second step the halosilane of the formula (VI) is used so that the amount of halide radicals present is equimolar to the silanol radicals in the polyorganosiloxane species from the first reaction step.

## Revendications

1. Procédé de préparation de polyorganosiloxanes de formule (I)

$$[O_{3-a/2}R_aSiY(SiR_aO_{3-a/2})_b]_c(R^1SiO_{3/2})_d(R^2_2SiO_{2/2})_e(R^3_3SiO_{1/2})_f(SiO_{4/2})_g [O_{3-h/2}R^4_hSi(SiR^5_2)_iSiR^4_jO_{3-j/2}]_k \quad (I)$$

dans laquelle les radicaux R peuvent être des radicaux identiques ou différents et signifient soit un radical hydrogène, soit un radical hydrocarboné organique monovalent, lié par Si-C, non substitué ou substitué par des hétéroatomes, comprenant 1 à 18 atomes de carbone, qui peut également être un radical hydrocarboné insaturé, Y représente une liaison chimique, un atome d'oxygène ou un radical organique bivalent à dodécavalent, non substitué ou substitué par des hétéroatomes, comprenant 1 à 24 atomes de carbone, qui se trouve sous forme liée aux atomes de silicium par une liaison Si-C,
les radicaux $R^1$, $R^2$ et $R^3$ signifient, indépendamment les uns des autres, un radical hydrogène ou un radical hydrocarboné en C1-C18, saturé ou insaturé, lié par SiC, qui peut être non substitué ou substitué par des hétéroatomes, ou un radical hydrocarboné en C1-C12 lié par l'intermédiaire d'un atome d'oxygène, qui peut contenir des hétéroatomes, ou un radical silanol, les radicaux $R^1$, $R^2$ et $R^3$ pouvant à chaque fois prendre leur signification indépendamment les uns des autres, de telle sorte que plusieurs radicaux $R^1$, $R^2$ ou, selon le cas, $R^3$, qui se trouvent sous forme liée au même atome de silicium, peuvent signifier différents radicaux du groupe défini,
les radicaux $R^4$ signifient, indépendamment les uns des autres, soit un radical hydrogène, soit un radical silanol, soit un radical hydrocarboné organique monovalent, lié par Si-C ou Si-O-C, non substitué ou substitué par des hétéroatomes, comprenant 1 à 18 atomes de carbone, qui peut également être un radical hydrocarboné insaturé,
les radicaux $R^5$ signifient, indépendamment les uns des autres, soit un radical hydrogène, soit un radical hydrocarboné organique monovalent, lié par Si-C, non substitué ou substitué par des hétéroatomes, comprenant 1 à 18 atomes de carbone, qui peut également être un radical hydrocarboné insaturé ou un radical de formule (II)

$$[O_{3-a/2}R_aSiY(SiR_aO_{3-a/2})_b]_c(R^1SiO_{3/2})_d(R^2{}_2SiO_{2/2})_e(R^3{}_3SiO_{1/2})_f(SiO_{4/2})_g \qquad (II),$$

dans laquelle, par rapport à tous les radicaux Y, R, $R^1$, $R^2$, $R^3$, $R^4$ et $R^5$ valant 100% en mole, au moins 0,1% en mole doivent être des radicaux oléfiniquement ou acétyléniquement insaturés,
par rapport à tous les radicaux Y, R, $R^1$, $R^2$, $R^3$, $R^4$ et $R^5$ valant 100% en poids, au plus une somme de 3% en poids sont des radicaux liés par Si-O-C et des radicaux silanol,
et par rapport à tous les radicaux Y, R, $R^1$, $R^2$, $R^3$, $R^4$ et $R^5$ valant 100% en poids, au plus une somme de 0,5% en poids sont des radicaux silanol,
a représente 0, 1 ou 2, les indices a sur les deux côtés du groupe Y pouvant prendre leur signification indépendamment l'un de l'autre, de telle sorte que différents a peuvent signifier, indépendamment l'un de l'autre, des valeurs différentes dans la plage de valeurs indiquée,
b représente un nombre d'une valeur de 1 à 11, de préférence 1,
c représente une valeur de 0 à 0,9,
d représente une valeur de 0 à 0,8,
e représente une valeur de 0 à 0,5,
f représente une valeur de 0,01 à 0,6,
g représente une valeur de 0 à 0,6,
h et j représentent, indépendamment l'un de l'autre, 0, 1 ou 2,
i signifie un nombre entier de valeur 0 à 50 et
k signifie une valeur de 0 à 0,9, où
$c+d+e+f+g+k = 1$, au moins une valeur c, d ou k étant > 0 et $e+g$ étant $\leq 0,6$,
les radicaux R, $R^1$, $R^2$, $R^3$, $R^4$ et $R^5$ et les indices a, b, c, d, e, f, g, h et i dans la formule (I) et dans la formule (II) présentant, indépendamment les uns des autres, les mêmes significations et pouvant prendre celles-ci dans les plages de valeurs décrites indépendamment les uns des autres,
dans lequel, dans une première étape, des silanes de formule (III)

$$R^6{}_lSiR^7{}_{4-l} \qquad (III),$$

dans laquelle $R^7$ signifie un groupe hydrolysable,
l représente un nombre entier de valeur 0, 1 ou 2 et
$R^6$, pour l = 1, signifie un radical $R^1$ et, pour l = 2, signifie un radical $R^2$,
et/ou des disilanes, des oligosilanes ou des polysilanes de formule (IV)

$$R^7{}_{3-h}R^4{}_hSi(SiR^5{}_2)_iSiR^4{}_jR^7{}_{3-j} \qquad (IV),$$

dans laquelle $R^7$ signifie, comme ci-dessus, un groupe hydrolysable et $R^4$, $R^5$, h, i et j présentent les mêmes significations que celles mentionnées ci-dessus,

et/ou des silicones pontées par organyle de formule (V)

$$R^7_{3-a}R_aSiY(SiR_aR^7_{3-a})_b \qquad (V),$$

dans laquelle $R^7$, R, Y, a et b présentent la signification déjà mentionnée,
sont transformés avec de l'eau et, si au moins l'un des radicaux hydrolysables $R^7$ n'est pas un radical halogène, avec utilisation de quantités catalytiques d'un ou de plusieurs acides favorisant l'hydrolyse et la condensation des composants selon les formules (III), (IV) et (V), en présence d'un solvant aprotique non miscible à l'eau,
l'eau ainsi que la quantité résiduelle d'acide dans la phase organique étant réduites chacune à moins de 10 000 ppm après la fin de la réaction et
dans une deuxième étape, le produit de réaction dissous dans le solvant organique inerte de la première étape est transformé sans eau avec un halogénosilane de formule (VI)

$$R^3_3SiR^8 \qquad (VI),$$

dans laquelle $R^3$ présente les mêmes significations que celles indiquées ci-dessus et $R^8$ signifie un atome d'halogène,
en présence d'une base auxiliaire.

**2.** Procédé selon la revendication 1, dans lequel les radicaux hydrocarbonés R, $R^1$, $R^2$, $R^3$, $R^4$ et $R^5$ sont choisis parmi les radicaux méthyle, phényle, vinyle, acryloyloxy et méthacryloyloxy ainsi que parmi les esters de l'acide acrylique ou les esters de l'acide méthacrylique d'alcools linéaires ou ramifiés comprenant 1 à 15 atomes de carbone.

**3.** Procédé selon l'une des revendications précédentes, dans lequel le solvant aprotique est un hydrocarbure aromatique.

**4.** Procédé selon l'une des revendications précédentes, dans lequel la base auxiliaire est utilisée en une quantité au moins équimolaire par rapport à l'halogénosilane.

**5.** Procédé selon l'une des revendications précédentes, dans lequel la base auxiliaire est choisie parmi les sels métalliques et les composés azotés basiques.

**6.** Procédé selon l'une des revendications précédentes, dans lequel, dans une troisième étape, les polyorganosiloxanes de formule (I) sont liés à un substrat métallique.

**7.** Procédé selon la revendication 6, dans lequel, dans une quatrième étape, les polyorganosiloxanes de formule (I) sont réticulés.

**8.** Stratifiés plaqués de métal, pouvant être préparés selon un procédé selon la revendication 6 ou 7, dans lequel, dans la deuxième étape, l'halogénosilane de formule (VI) est utilisé de telle sorte qu'on est en présence d'une quantité équimolaire de radicaux halogénure par rapport aux radicaux silanol sur l'espèce de polyorganosiloxane.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6258881 B
- US 3737479 A
- US 5834585 A
- US 20040138355 A
- US 3960985 A
- US 20160244610 A
- US 2020369855 A
- US 5548053 A
- US 20160244610 F
- US 20180220530 A
- US 20180215971 A
- US 7358316 B2
- US 2019359774 A
- US 2018022053 A


### In der Beschreibung aufgeführte Nicht-Patentliteratur


- **XUNJUN CHEN** ; **MINGHAO YI** ; **SHUFANG WU** ; **LEWEN TAN** ; **YIXIN XU** ; **ZHIXING GUAN** ; **JIANFANG GE** ; **GUOQIANG YIN**. Synthesis of Silphenylene-Containing Siloxane Resins Exhibiting Strong Hydrophobicity and High Water Vapor Barriers. *Coatings*, 2019, vol. 9, 481, www.mdpi.com/journal/-coatings